# EUROPEAN PATENT SPECIFICATION

(11) **EP 4 296 872 B1**
(45) Date of publication and mention of the grant of the patent: **24.12.2025**
(21) Application number: 23180786.8
(22) Date of filing: 21.06.2023
(51) Int. Cl.: G06F 21/55, H04L 9/40

(54) **DISTRIBUTED DIGITAL SECURITY SYSTEM FOR PREDICTING MALICIOUS BEHAVIOR**
VERTEILTES DIGITALES SICHERHEITSSYSTEM ZUR VORHERSAGE BÖSARTIGER VERHALTEN
SYSTÈME DE SÉCURITÉ NUMÉRIQUE DISTRIBUÉ POUR PRÉDIRE UN COMPORTEMENT MALVEILLANT

(30) Priority: 24.06.2022 US 202217849537
(43) Date of publication of application: 27.12.2023
(73) Proprietor: CrowdStrike, Inc., Sunnyvale, CA 94086 (US)
(72) Inventor: Meyer, Brett, Sunnyvale, 94086 (US); Spurlock, Joel, Sunnyvale, 94086 (US); Forth, Andrew, Sunnyvale, 94086 (US); Koster, Kirby James, Sunnyvale, 94086 (US); Faulhaber, Joseph, Sunnyvale, 94086 (US)
(74) Representative: Murgitroyd & Company

(56) References cited:
- US-A1- 2021 406 368
- US-B1- 9 516 053

## Description

This U.S. Patent Application is related to U.S. Patent Application Number 16/849,543, entitled "Distributed Digital Security System" filed April 15, 2020, U.S. Patent Application Number 17/325,097, entitled "Real-Time Streaming Graph Queries" filed May 19, 2021, and U.S. Patent Application Number 17/576,734, entitled "Optimized Real-Time Streaming Graph Queries in a Distributed Digital Security System" filed January 14, 2022.

### BACKGROUND

Digital security exploits that steal or destroy resources, data, and private information on computing devices are an increasing problem. Governments and businesses devote significant resources to preventing intrusions and thefts related to such digital security exploits. Some of the threats posed by security exploits are of such significance that they are described as cyber terrorism or industrial espionage.

Security threats come in many forms, including computer viruses, worms, trojan horses, spyware, keystroke loggers, adware, and rootkits. Such security threats may be delivered in or through a variety of mechanisms, such as spearfish emails, clickable links, documents, executables, or archives. Other types of security threats may be posed by malicious users who gain access to a computer system and attempt to access, modify, or delete information without authorization.

Prior art document US2021/406368-A1 discloses techniques for identifying malicious behaviour using a trained deep learning model, wherein a trained deep learning model that takes a sequence of ordered signals as input to generate a score that indicates whether the sequence is malicious or benign is used.

### SUMMARY

Accordingly there is provided a method, a system, and one or more non-transitory computer-readable media as detailed in the claims that follow.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items or features.
FIG. 1 depicts an example of a distributed security system.
FIG. 2 depicts an example of a refinement operation that can be performed by an instance of a compute engine in a distributed security system.
FIG. 3 depicts an example of a composition operation that can be performed by an instance of a compute engine in a distributed security system.
FIG. 4 depicts a flowchart of operations that can be performed by an instance of a compute engine in a distributed security system.
FIG. 5 depicts an example data flow in a bounding manager of a security agent.
FIG. 6 depicts an example of data flow in a storage engine of the security network.
FIG. 7 depicts an example of a storage processor sending event data to a corresponding compute engine.
FIG. 8 depicts a flowchart of example operations that can be performed by a storage processor in a storage engine.
FIG. 9 depicts an example of event data associated with a storage engine.
FIG. 10 depicts a flowchart of an example process for an emissions generator of the storage engine to generate an output event stream for one or more consumers.
FIG. 11 depicts a flowchart of an example process for predicting a target behavior in stream of event data.
FIG. 12 depicts a predictions engine for predicting a target behavior in a filter stream of event data.
FIG. 13 depicts an example system architecture for a client device.
FIG. 14 depicts an example system architecture for one or more cloud computing elements of the security network.

### DETAILED DESCRIPTION

### Introduction

Events can occur on computer systems that may be indicative of security threats to those systems. While in some cases a single event may be enough to trigger detection of a security threat, in other cases individual events may be innocuous on their own but be indicative of a security threat when considered in combination with one or more other events. For instance, the acts of opening a file, copying file contents, and opening a network connection to an Internet Protocol (IP) address may each be normal and/or routine events on a computing device when each act is considered alone, but the combination of some or all of the acts may indicate that a process is intending to attempt, or indeed attempting, to steal information from a file and send it to a server.

Digital security systems have accordingly been developed that can observe events that occur on computing devices, and that can use event data about one or more event occurrences to detect and/or analyze security threats. However, many such digital security systems are limited in some ways.

For example, some digital security systems only detect or analyze security threats after the security threats have already occurred, such as when information has been copied from a file and sent to a server. These systems do not look at event occurrences in an attempt to predict anomalous or malicious behavior, before it occurs, in time to take proactive steps to attempt to prevent the anomalous or malicious behavior.

As another example, some digital security systems only execute locally on individual computing devices. While this can be useful in some cases, local-only digital security systems may miss broader patterns of events associated with security threats that occur across a larger set of computing devices. For instance, an attacker may hijack a set of computing devices and cause each one to perform events that are innocuous individually, but that cause harmful results on a network, server, or other entity when the events from multiple computing devices are combined. Local-only security systems may accordingly not be able to detect a broader pattern of events across multiple computing devices.

Some digital security systems do cause event data to be reported to servers or other network elements, such that network and/or cloud processing can be used to analyze event data from one or more computing devices. However, many such cloud-based systems can become overloaded with event data reported by individual computing devices, much of which may be noise and thus be irrelevant to security threat detection. For example, many systems do not have ways of limiting the event data that is initially reported to the cloud. Many systems also do not provide indications to the cloud about reasons why specific event datahas been sent to the cloud.

Furthermore, some digital security systems find it challenging to process event data to accurately distinguish between legitimate or malicious or anomalous behavior in the event data, for example, because malware and threat actor behavior is rapidly changing.

Described herein are systems and methods for a distributed digital security system that can address these and other deficiencies of digital security systems.

### Distributed Security System

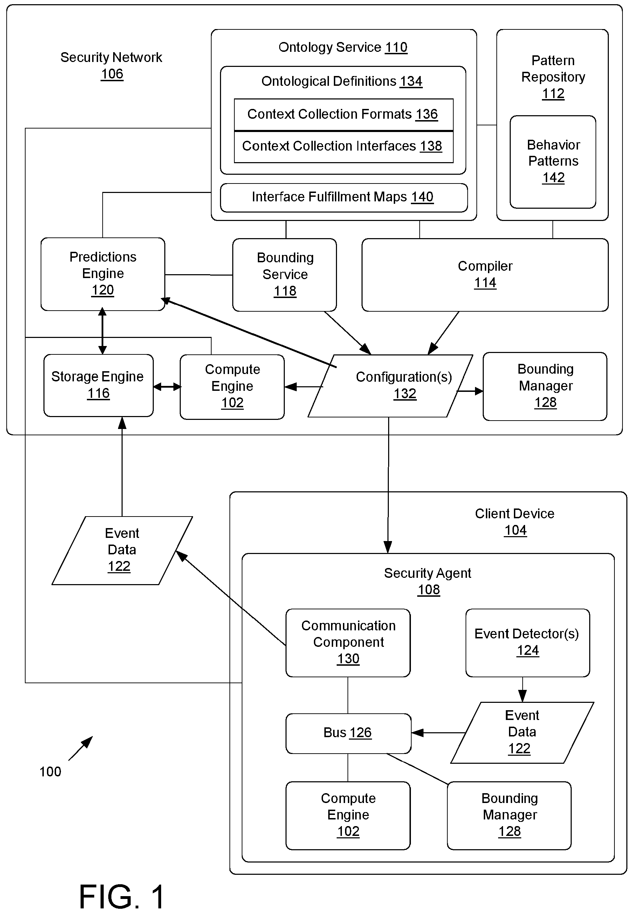

FIG. 1 depicts an example of a distributed security system 100. The distributed security system 100 can include distributed instances of a compute engine 102 that can run locally on one or more client computing devices 104, or simply, client devices 104, and/or in a security network 106. As an example, some instances of the compute engine 102 can run locally on client devices 104 as part of security agents, or sensors, 108 executing on those client devices 104. As another example, other instances of the compute engine 102 can run remotely in a security network 106, for instance within a cloud computing environment associated with the distributed security system 100. The compute engine 102 can execute according to portable computer executable code that can run locally as part of a security agent 108, in a security network 106, and/or in other local or network systems that can also process event data as described herein.

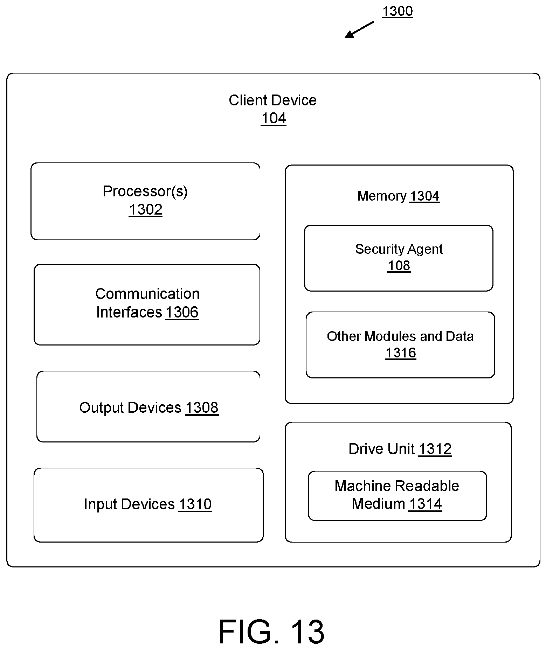

A client device 104 can be, or include, one or more computing devices. In various examples, a client device 104 can be a workstation, a personal computer (PC), a laptop computer, a tablet computer, a personal digital assistant (PDA), a cellular phone, a media center, an Internet of Things (IoT) device, a server or server farm, multiple distributed server farms, a mainframe, or any other sort of computing device or computing devices. In some examples, a client device 104 can be a computing device, component, or system that is embedded or otherwise incorporated into another device or system. In some examples, the client device 104 can also be a standalone or embedded component that processes or monitors incoming and/or outgoing data communications. For example, the client device 104 can be a network firewall, network router, network monitoring component, a supervisory control and data acquisition (SCADA) component, or any other component. An example system architecture for a client device 104 is illustrated in greater detail in FIG. 13 and is described in detail below with reference to that figure.

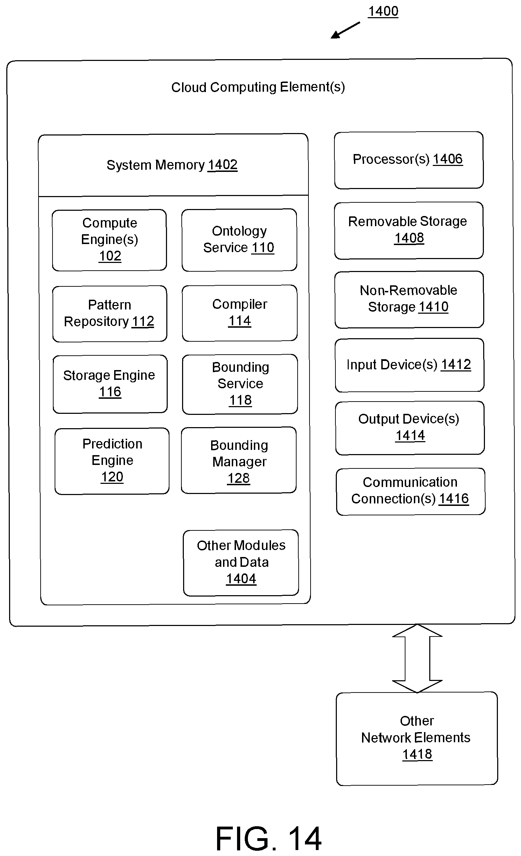

The security network 106 can include one or more servers, server farms, hardware computing elements, virtualized computing elements, and/or other network computing elements that are remote from the client devices 104. In some examples, the security network 106 can be considered to be a cloud or a cloud computing environment. Client devices 104, and/or security agents 108 executing on such client devices 104, can communicate with elements of the security network 106 through the Internet or other types of network and/or data connections. In some examples, computing elements of the security network 106 can be operated by, or be associated with, an operator of a security service, while the client devices 104 can be associated with customers, subscribers, and/or other users of the security service. An example system architecture for one or more cloud computing elements that can be part of the security network 106 is illustrated in greater detail in FIG. 14 and is described in detail below with reference to that figure.

As shown in FIG. 1, instances of the compute engine 102 can execute locally on client devices 104 as part of security agents 108 deployed as runtime executable applications that run locally on the client devices 104. Local instances of the compute engine 102 may execute in security agents 108 on a homogeneous or heterogeneous set of client devices 104.

One or more cloud instances of the compute engine 102 can also execute on one or more computing elements of the security network 106, remote from client devices 104. The distributed security system 100 can also include a set of other cloud elements that execute on, and/or are stored in, one or more computing elements of the security network 106. The cloud elements of the security network 106 can include an ontology service 110, a pattern repository 112, a compiler 114, a storage engine 116, and/or a bounding service 118.

Additionally, as described in U.S. Patent Application Number 17/325,097, entitled "Real-Time Streaming Graph Queries" filed May 19, 2021, and U.S. Patent Application Number 17/576,734, entitled "Optimized Real-Time Streaming Graph Queries in a Distributed Digital Security System" filed January 14, 2022, the security network can include an event query host (not shown in FIG. 1) that can store, in local memory, for example, short term and/or long term storage 614 operated by storage engine 116, an event graph that represents events and relationships between events. Accordingly, information in the event graph can be locally-accessible by elements or components of the event query host. An event processor of the event query host can add representations of events and relationships between events that occurred on a client computing device to the event graph, substantially in real-time as information about the events and their corresponding relationships, i.e., event data 122, is received by the event query host. The event processor can then forward the event information to different local query execution engines ("query engines") such as instances of compute engine 102 or other instances of an event query host. Alternatively, the different query engines can receive notification of event information as it is received and/or as event data is added to the event graph, and access the event data directly from the graph.

If an event added to the event graph matches a trigger event for a query to be executed by a first one of the different query engines, the event processor can add a corresponding query instance to a query queue, to be executed at a scheduled execution time by the first one of the query engines. If the event added to the event graph matches a trigger event for another query to be executed by a second one of the different query engines, the event processor can add a corresponding query instance to a query queue, to be executed by the second query engine. Accordingly, query instances can be scheduled and executed at least in part due to corresponding event data that has actually been received by the event query host.

Additionally, at the scheduled execution time for a query instance to be executed by the first query engine, the first query engine can search the local event graph for a corresponding event pattern. If a matching event pattern is not found in the local event graph, the first query engine can reschedule the query instance in the query queue to be re-attempted at a particular later point in time when a matching event pattern is more likely to be in the event graph. The first query engine may also store a partial query state associated with any matching portions of the event pattern that were found in the event graph, such that the first query engine can avoid searching for the full event pattern again during the next execution of the query instance.

If the event added to the event graph matches a trigger event for the second query engine, such as an instance of compute engine 102, the event processor can add a corresponding query instance to a query queue, to be executed by the compute engine. As described further below, the compute engine can process event data about single events and/or patterns of events that occur on one or more computing devices. For example, the compute engine can perform comparisons, such as string match comparisons, value comparisons, hash comparisons, and/or other types of comparisons on event data for one or more events, and produce new event data based on results of the comparisons. For example, the compute engine can process event data in an event stream using refinements and/or compositions, as further discussed below.

As described further below, local and/or cloud instances of the compute engine 102, and/or other elements of the distributed security system 100, can process event data 122 about single events and/or patterns of events that occur on one or more client devices 104. Events can include any observable and/or detectable type of computing operation, networking operation, behavior, or other action that may occur on or in connection with one or more client devices 104. Events can include events and behaviors associated with Internet Protocol (IP) connections, other network connections, Domain Name System (DNS) requests, operating system functions, file operations, registry changes, process executions, hardware operations, such as virtual or physical hardware configuration changes, and/or any other type of event. By way of non-limiting examples, an event may be that a process opened a file, that a process initiated a DNS request, that a process opened an outbound connection to a certain IP address, that there was an inbound IP connection, that values in an operating system registry were changed, or be any other observable or detectable occurrence of an event on or in connection with a client device 104. In some examples, events based on other such observable or detectable occurrences can be physical and/or hardware events, for instance that a Universal Serial Bus (USB) memory stick or other USB device was inserted or removed, that a network cable was plugged in or unplugged, that a cabinet door or other component of a client device 104 was opened or closed, or any other physical or hardware- related event.

Events that occur on or in connection with one or more client devices 104 can be detected or observed by event detectors 124 of security agents 108 on those client devices 104. For example, a security agent 108 may execute at a kernel-level and/or as a driver such that the security agent 108 has visibility into operating system activities from which one or more event detectors 124 of the security agent 108 can observe event occurrences or derive or interpret the occurrences of events. In some examples, the security agent 108 may load at the kernel-level at boot time of the client device 104, before or during loading of an operating system, such that the security agent 108 includes kernel-mode components such as a kernel-mode event detector 124. In some examples, a security agent 108 can also, or alternately, have components that operate on a computing device in a user-mode, such as user-mode event detectors 124 that can detect or observe user actions and/or user-mode events. Examples of kernel-mode and user-mode components of a security agent 108 are described in greater detail in U.S. Patent Application Number 13/492,672, entitled "Kernel-Level Security Agent" and filed on June 8, 2012, which issued as U.S. Patent Number 9,043,903 on May 26, 2015.

When an event detector 124 of a security agent 108 detects or observes a behavior or other event that occurs on a client device 104, the security agent 108 can place corresponding event data 122 about the event occurrence on a bus 126 or other memory location. For instance, in some examples the security agent 108 may have a local version of the storage engine 116 described herein, or have access to other local memory on the client device 104, where the security agent 108 can at least temporarily store event data 122. The event data 122 on the bus 126, or stored at another memory location, can be accessed by other elements of the security agent 108, including a local bounding manager 128, an instance of the compute engine 102, and/or a communication component 130 that can send the event data 122 to the security network 106. The event data 122 can be formatted and/or processed according to information stored at, and/or provided by, the ontology service 110, as will be described further below. The event data 122 may also be referred to as a "context collection" of one or more data elements.

Each security agent 108 can have a unique identifier, such as an agent identifier (AID). Accordingly, distinct security agents 108 on different client devices 104 can be uniquely identified by other elements of the distributed security system 100 using an AID or other unique identifier, or a combination of an AID and another unique identifier, such as a client device identifier or network and/or IP address associated with the client device. In some examples, a security agent 108 on a client device 104 can also be referred to as a sensor 108.

In some examples, event data 122 about events detected or observed locally on a client device 104 can be processed locally by a compute engine 102 and/or other elements of a local security agent 108 executing on that client device 104. However, in some examples, event data 122 about locally-occurring events can also, or alternately, be sent by a security agent 108 on a client device 104 to the security network 106, such that the event data 122 can be processed by a cloud instance of the compute engine 102 and/or other cloud elements of the distributed security system 100. Accordingly, event data 122 about events that occur locally on client devices 104 can be processed locally by security agents 108, be processed remotely via cloud elements of the distributed security system 100, or be processed by both local security agents 108 and cloud elements of the distributed security system 100.

In some examples, security agents 108 on client devices 104 can include a bounding manager 128 that can control how much event data 122, and/or what types of event data 122, the security agents 108 ultimately send to the security network 106. The bounding manager 128 can accordingly prevent the security network 106 from being overloaded with event data 122 about every locally-occurring event from every client device 104, and/or can limit the types of event data 122 that are reported to the security network 106 to data that may be more likely to be relevant to cloud processing, as will be described further below. In some examples, a bounding manager 128 can also mark-up event data 122 to indicate one or more reasons why the event data 122 is being sent to the security network 106, and/or provide statistical information to the security network 106.

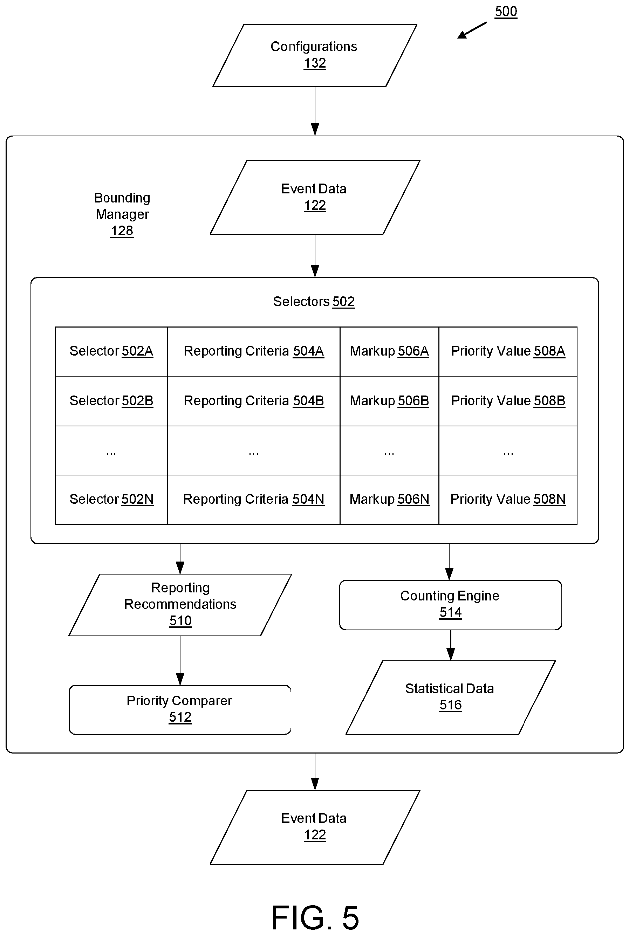

In another example, security network 106 can include a bounding manager 128 that can control how much event data 122, and/or what types of event data 122, elements or components of the security network 106 send to other elements or components of the security network 106. The bounding manager 128 can accordingly prevent the security network 106 from being overloaded with event data 122 being transferred between elements or components of the security network 106, for example, between instances of compute engine 102, or between instances of predictions engine 120, or from an instance of compute engine 102 to an instance of predictions engine 120, and/or can limit the types of event data 122 that are output from one component to another within the security network 106 to data that is, or may be more likely to be, relevant to processing by the receiving component. In some examples, a bounding manager 128 can also mark-up event data 122 to indicate one or more reasons why the event data 122 is being transmitted within the security network 106, and/or provide statistical information to the security network 106. The bounding manager 128, and operations of the bounding manager 128, are discussed further below with respect to FIG. 5.

Cloud elements such as the compiler 114, and/or the bounding service 118, can generate configurations 132 for other elements of the distributed security system 100 such as configurations for local and/or cloud instances of the compute engine 102, configurations for local bounding managers 128, and/or configurations for other elements, such as instances of predictions engine 120. Configurations 132 can be channel files, executable instructions, and/or other types of configuration data.

The ontology service 110 can store ontological definitions 134 that can be used by elements of the distributed security system 100. For example, rules and other data included in configurations 132 for the compute engine 102, predictions engine 120, bounding manager 128, and/or other elements of distributed security system 100 can be based on ontological definitions 134 maintained at the ontology service 110. As discussed above, a piece of event data 122 that is generated by and/or processed by one or more components of the distributed security system 100 can be a "context collection" of data elements that is formatted and/or processed according to information stored at, and/or provided by, the ontology service 110. The ontological definitions 134 maintained at the ontology service can, for example, include definitions of context collection formats 136 and context collection interfaces 138. The ontology service 110 can also store interface fulfillment maps 140. Each interface fulfillment map 140 can be associated with a specific pairing of a context collection format 136 and a context collection interface 138.

An ontological definition 134 of a context collection format 136 can define data elements and/or a layout for corresponding event data 122. For example, an ontological definition 134 of a context collection format 136 can identify specific types of information, fields, or data elements that should be captured in event data 122 about a type of event that occurs on a client device 104. For example, although any number of attributes about an event that occurs on a client device 104 could be captured and stored in event data 122, an ontological definition 134 of a context collection format 136 can define which specific attributes about that event are to be recorded into event data 122 for further review and processing. Accordingly, event data 122 can be considered a context collection associated with a particular context collection format 136 when the event data 122 includes data elements as defined in an ontological definition 134 of that particular context collection format 136.

As an example, if a buffer on a client device 104 includes information about four different processes associated with an event, and the four processes were spawned by a common parent process, an ontological definition 134 of a context collection format 136 associated with that event may indicate that only a process ID of the common parent process should be stored in event data 122 for that event, without storing process IDs of the four child processes in the event data 122. However, as another example, an ontological definition 134 of a different context collection format 136 may indicate that a set of process IDs, including a parent process ID and also a set of child process IDs, should be stored in event data 122 to indicate a more complex structure of parent-child process relationships associated with an event. A context collection format 136 may also, or alternately, indicate other types of data elements or fields of information that should be captured about an event, such as a time, event type, network address of other network-related information, client device 104 information, and/or any other type of attribute or information.

Various client devices 104 and/or other elements of the distributed security system 100, such as compute engine 102, or predictions engine 120, may capture or process event data 122 based on the same or different context collection formats 136. For example, a first security agent 108 on a first client device 104 that detects a network event may capture event data 122 about the network event including an associated process ID according to a first context collection format 136 for network events. However, a second security agent 108 on a second client device 104 may detect the same type of network event, but may capture event data 122 about the network event including an associated process ID as well as additional attributes such as an associated time or network address according to a second context collection format 136 for network events. In this example, the first security agent 108 and the second security agent 108 may transmit event data 122 for the same type of network event to the security network 106 based on different context collection formats 136. However, a cloud instance of the compute engine 102, or other elements of the distributed security system 100, such as an instance of predictions engine 120, may nevertheless be configured to process event data 122 based on different context collection formats 136 when the event data 122 satisfies the same context collection interface 138.

An ontological definition 134 of a context collection interface 138 can indicate a set of one or more data elements that a component or element of the distributed security system 100 expects to be present within event data 122 for the component or element to consume and/or process the event data 122. In particular, an ontological definition 134 of a context collection interface 138 can define a minimum set of data elements, such that event data 122 that includes that minimum set of data elements may satisfy the context collection interface 138, although additional data elements beyond the minimum set may or may not also be present in that event data 122. As an example, if an ontological definition 134 of a context collection interface 138 specifies that data elements A and B are to be present in event data 122, a first piece of event data 122 that includes data elements A and B may satisfy the context collection interface 138, and a second piece of event data 122 that includes data elements A, B, and C may also satisfy the context collection interface 138. However, in this example, a third piece of event data 122 that includes data elements A and C would not satisfy the context collection interface 138, because the third piece of event data 122 does not include data element B specified by the ontological definition 134 of the context collection interface 138.

The ontology service 110 can also generate and/or maintain interface fulfillment maps 140. In some examples, an interface fulfillment map 140 may also be referred to as a context collection implementation. An interface fulfillment map 140 can be provided in the ontology service 110 to pair individual context collection formats 136 with individual context collection interfaces 138. An interface fulfillment map 140 associated with a particular context collection format 136 and a particular context collection interface 138 can indicate how event data 122, formatted according to the particular context collection format 136, satisfies the particular context collection interface 138. Accordingly, event data 122 formatted according to a particular context collection format 136 may satisfy a particular context collection interface 138 if the event data 122 includes the data elements specified by the ontological definition 134 of the particular context collection interface 138, and if an interface fulfillment map 140 exists at the ontology service 110 that is associated with both the particular context collection format 136 and the particular context collection interface 138.

For example, when an ontological definition 134 of a particular context collection interface 138 specifies that data elements A and B are to be present for event data 122 to match the particular context collection interface 138, the ontology service 110 can have a first interface fulfillment map 140 associated with the particular context collection interface 138 and a first context collection format 136, and a second interface fulfillment map 140 associated with the particular context collection interface 138 and a second context collection format 136. The first interface fulfillment map 140 can indicate that a specific first portion, such as one or more specific bits, of event data 122 formatted according to the first context collection format 136 maps to data element A of the context collection interface 138, and that a specific second portion of that event data 122 formatted according to the second context collection format 136 maps to data element B of the context collection interface 138. The second interface fulfillment map 140 may indicate that a different portion of event data 122 formatted according to the second context collection format 136 maps to data element A of the context collection interface 138, and that a different second portion of that event data 122 maps to data element B of the context collection interface 138.

The ontology service 110 can provide interface fulfillment maps 140 to compute engines 102, bounding managers 128, and/or other elements, such as predictions engine 120, of the distributed security system 100. As discussed above, an element of the distributed security system 100 may consume or process event data 122 according to a context collection interface 138. For example, elements of the distributed security system 100 can be configured, for instance via configurations 132, to process event data 122 based in part on whether event data 122 satisfies particular context collection interfaces 138. Accordingly, when an element, such as a compute engine 102 or a bounding manager 128, or a predictions engine 120, receives event data 122 formatted according to a particular context collection format 136, the element can use an interface fulfillment map 140 that corresponds to that particular context collection format 136 and the context collection interface 138 to determine whether the received event data 122 satisfies the context collection interface 138, and/or to locate and identify specific portions of the event data 122 that match the data elements specified by the ontological definition 134 of the context collection interface 138.

For example, a configuration 132 for a compute engine 102 can be based on a context collection interface 138 that specifies that a process ID for a network event should be included in event data 122. The compute engine 102 can accordingly use that configuration 132 and corresponding interface fulfillment maps 140 to process event data 122 that the compute engine 102 receives for network events that are formatted according to any context collection format 136 that includes at least the process ID expected by the context collection interface 138. Accordingly, if the compute engine 102 receives first event data 122 about a first network event is formatted based on a first context collection format 136 that includes a process ID, and also receives second event data 122 about a second network event is formatted based on a second context collection format 136 that includes a process ID as well as execution time data, the compute engine 102 can nevertheless process both the first event data 122 and the second event data 122 because both include at least the process ID specified by the context collection interface 138. As such, the compute engine 102 can use the same configuration 132 to process event data 122 in varying forms that include at least common information expected by a context configuration interface 138, without needing new or updated configurations 132 for every possible data type or format for event data 122.

Similarly, for example, a configuration 132 for a predictions engine 120 can be based on a context collection interface 138 that specifies that a process ID for a network event should be included in event data 122. The predictions engine 120 can accordingly use that configuration 132 and corresponding interface fulfillment maps 140 to process event data 122 that the predictions engine 120 receives for network events that are formatted according to any context collection format 136 that includes at least the process ID expected by the context collection interface 138. Accordingly, if the predictions engine 120 receives first event data 122 about a first network event is formatted based on a first context collection format 136 that includes a process ID, and also receives second event data 122 about a second network event is formatted based on a second context collection format 136 that includes a process ID as well as execution time data, predictions engine 120 can nevertheless process both the first event data 122 and the second event data 122 because both include at least the process ID specified by the context collection interface 138. For example, the predictions engine 120 may receive first event data 122 about a first network event that is formatted based on a first context collection format 136 that includes a process ID, and select a first instance of a first machine learning algorithm to process the first event data 122, while it receives second event data 122 about a second network event formatted based on a second context collection format 136 that includes a process ID as well as execution time data, and selects a second instance of the first machine learning algorithm or a first instance of a second machine learning algorithm to process the second event data 122. As such, predictions engine 120 can use the same configuration 132 to process event data 122 in varying forms that include at least common information expected by a context configuration interface 138, without needing new or updated configurations 132 for every possible data type or format for event data 122.

The ontological definitions 134 can be used, either directly or indirectly, consistently by multiple elements throughout the distributed security system 100. For example, an ontological definition 134 can be used by any runtime element of the distributed security system 100, and the ontological definition 134 may be agnostic as to whether any particular runtime element of the distributed security system 100 is running according to a C++ runtime, a Java runtime, or any other runtime. In some examples, new and/or edited data types defined by ontological definitions 134 at the ontological service 110 can be used by multiple elements of the distributed security system 100 without manually recoding those elements individually to use the new and/or edited data types or adjusting the ontological definitions 134 to work with different types of runtimes.

As an example, when a new ontological definition 134 for a new context collection format 136 is defined at the ontology service 110, a compiler 114 or other element can automatically generate new configurations 132 for compute engines 102, event detectors 124, predictions engine 120, or other elements that can generate new or modified or refined event data 122, such that the new or modified or refined event data 122 is formatted to include data elements based on the new context collection format 136. For instance, as will be discussed below, a compute engine 102 and/or other elements of the distributed security system 100 can process incoming event data 122 to generate new event data 122, for example by refining and/or combining received event data 122 using refinement operations and/or composition operations. Accordingly, an ontological definition 134 can define a context collection format 136 indicating which types of data elements should be copied from received event data 122 and be included in new refined event data 122 according to a refinement operation, or be taken from multiple pieces of received event data 122 and used to generate new combined event data 122 according to a composition operation. In other examples, when a new ontological definition 134 for a new context collection format 136 is defined at the ontology service 110, new interface fulfillment maps 140 that correspond to the new context collection format 136 and one or more context collection interfaces 138 can be generated and provided to elements of the distributed security system 100.

As another example, when a new ontological definition 134 for a new context collection interface 138 is defined at the ontology service 110, the compiler 114 can automatically generate configurations 132 for local and cloud instances of the compute engine 102. The configurations 132 can indicate expected data elements according to the new context collection interface 138, such that the compute engine 102 can process any type of event data 122 that is based on any context collection format 136 that includes at least those expected data elements when a corresponding interface fulfillment map 140 exists, even though no new source code has been written for the compute engine 102 that directly indicates how to process each possible type or format of event data 122 that may include those expected data types. Similarly, the bounding service 118 can generate configurations 132 for bounding managers 128 based at least in part on the ontological definition 134 of a new context collection interface 138, such that the bounding manager 128 can also process event data 122 that matches the new context collection interface 138 when a corresponding interface fulfillment map 140 exists. In other examples, when a new ontological definition 134 for a new context collection format 136 is defined at the ontology service 110, new interface fulfillment maps 140 that correspond to the new context collection format 136 and one or more context collection interfaces 138 can be generated and provided to elements of the distributed security system 100, such as predictions engine 120. Accordingly, a new context collection interface 138 can be used by the compute engine 102, the bounding manager 128, and the predictions engine 120, based on a corresponding interface fulfillment map 140, without directly recoding the compute engine 102, the bounding manager 128, or the predictions engine 120, or regardless of whether instances of the compute engine 102 and/or the bounding manager 128 and/or the predictions engine 120 execute using different runtimes.

In some examples, a user interface associated with the ontology service 110 can allow users to add and/or modify ontological definitions 134. In some examples, elements of the distributed security system 100 may, alternately or additionally, access the ontology service 110 to add and/or modify ontological definitions 134 used by those elements, such that other elements of the distributed security system 100 can in turn be configured to operate according to the ontological definitions 134 stored at the ontology service 110.

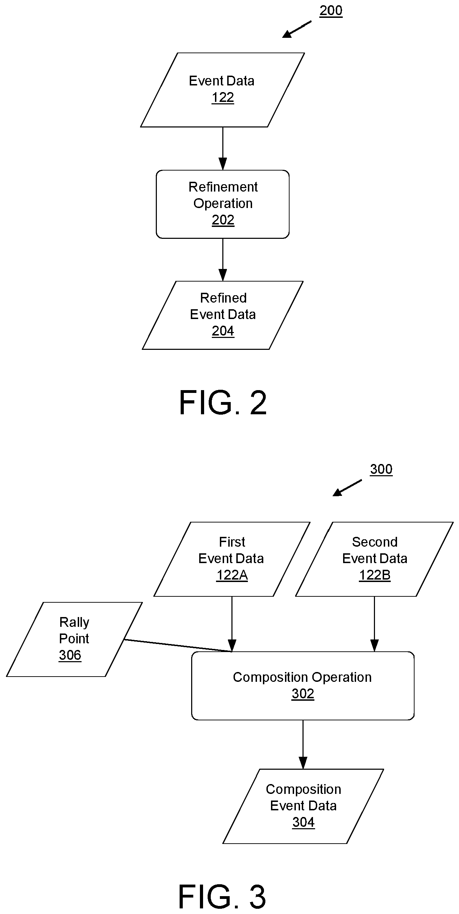

For example, as will be described in further detail below, a compiler 114 can generate configurations 132 for instances of the compute engine 102 based on text descriptions of types of events and/or patterns of events that are to be detected and/or processed using the distributed security system 100. If the compiler 114 determines that such a configuration 132 would involve the compute engine 102 generating new types of event data 122 that may include new data elements or a different arrangement of data elements, for example using refinement operations or composition operations as discussed below with respect to FIGS. 2 and 3, the compute engine 102 can add or modify ontological definitions 134 of corresponding context collection formats 136 at the ontological service 110. Other elements of the distributed security system 100, such as predictions engine 120, can in turn obtain the new or modified ontological definitions 134 and/or interface fulfillment maps 140 from the ontological service 110 to understand how to interpret those new types of event data 122.

The pattern repository 112 can store behavior patterns 142 that define patterns of one or more events that can be detected and/or processed using the distributed security system 100. A behavior pattern 142 can identify a type of event, and/or a series of events of one or more types, that represent a behavior of interest. For instance, a behavior pattern 142 can identify a series of events that may lead to, or be associated, with malicious activity on a client device 104, such as when malware is executing on the client device 104, when the client device 104 is under attack by an adversary who is attempting to access or modify data on the client device 104 without authorization, or when the client device 104 is subject to any other security threat.

In some examples, a behavior pattern 142 may identify a pattern of events that may occur on more than one client device 104. For example, a malicious actor may attempt to avoid detection during a digital security breach by causing different client devices 104 to perform different events that may each be innocuous on their own, but that can cause malicious results in combination. Accordingly, a behavior pattern 142 can represent a series of events associated with behavior of interest that may occur on more than one client device 104 during the behavior of interest. In some examples, cloud instances of the compute engine 102 may be configured to identify when event data 122 from multiple client devices 104 collectively meets a behavior pattern 142, even if events occurring locally on any of those client devices 104 individually would not meet the behavior pattern 142.

In some examples, a "rally point" or other behavior identifier may be used to link event data 122 associated with multiple events that may occur on a client device 104, or across more than one client device 104 as part of a larger behavior pattern 142 over a period of time. For example, as will be described below, a compute engine 102 can create a rally point 306 when first event data 122 associated with a behavior pattern 142 is received, to be used when second event data 122 that is received at a later point in time that is also associated with the behavior pattern 142. Rally points are discussed in more detail below with respect to FIG. 3 in association with composition operations.

The compiler 114 can generate configurations 132 for cloud and/or local instances of the compute engine 102 and other elements such as bounding manager 128 or instances of predictions engine 120. In some examples, the compiler 114 can generate configurations 132 based at least in part on ontological definitions 134 from the ontology service 110 and/or behavior patterns 142 from the pattern repository 112. For example, a behavior pattern 142 may indicate logic for when event data 122 about a pattern of events can be created and/or processed.

In some examples, the compiler 114 can generate configurations 132 for the compute engine 102 or other elements using a fundamental model that includes refinements and/or compositions of behavioral expressions, as will be discussed further below. Although a configuration 132 for the compute engine 102 can include binary representations of instructions, those instructions can be generated by the compiler 114 such that the instructions cause the compute engine 102 to process and/or format event data 122 based on corresponding context collection formats 136 and/or context collection interfaces 138 defined by ontological definitions 134.

The storage engine 116 can process and/or manage event data 122 that is sent to the security network 106 by client devices 104. In some examples, the storage engine 116 can receive event data 122 from security agents 108 provided by an operator of a security service that also runs the security network 106. However, in other examples, the storage engine 116 can also receive and process event data 122 from any other source, including an instance of compute engine 102 executing in security network 106, an instance of the predictions engine executing in security network 106, security agents 108 associated with other vendors or streams of event data 122 from other providers.

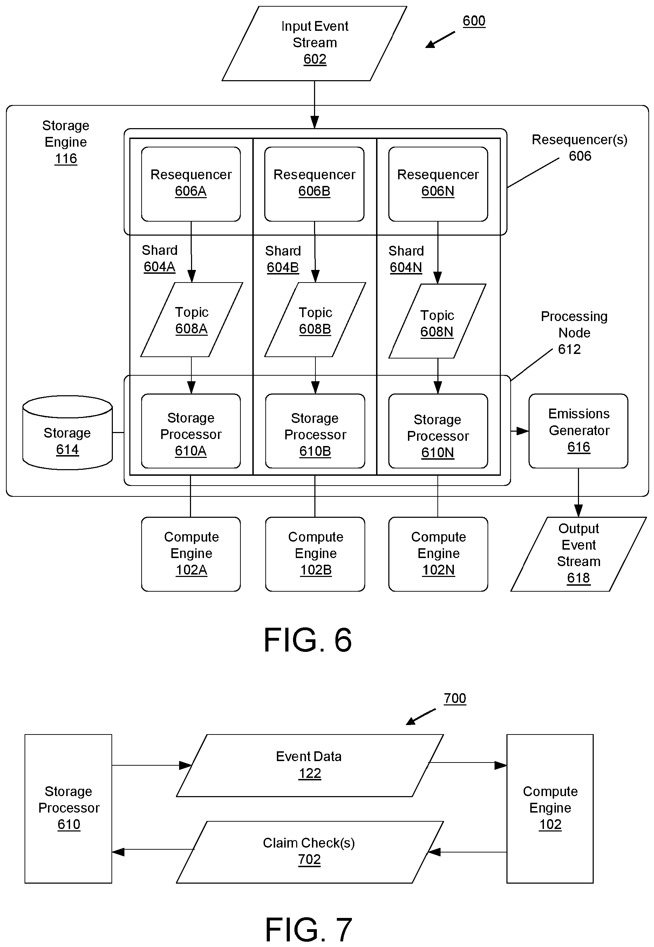

As will be explained in more detail below, the storage engine 116 can sort incoming event data 122, route event data 122 to corresponding instances of the compute engine 102, store event data 122 in short-term and/or long-term storage, output event data 122 to other elements of the distributed security system 100, such as instances of the predictions engine 120, and/or perform other types of storage operations. The storage engine 116, and operations of the storage engine 116, are discussed further below with respect to FIGS. 6-10.

The bounding service 118 can generate configurations 132 for bounding managers 128 of local security agents 108. For example, the bounding service 118 can generate new or modified bounding rules that can alter how much, and/or what types of, event data 122 a bounding manager 128 permits a security agent 108 to send to the security network 106. The bounding service 118 can provide the bounding rules to bounding managers 128 in channel files or other types of configurations 132. In some examples, a user interface associated with the bounding service 118 can allow users to add and/or modify bounding rules for bounding managers 128. In some examples, bounding rules can be expressed through one or more selectors 502, as discussed further below with respect to FIG. 5.

### Compute Engine

An instance of the compute engine 102, in the security network 106 or in a security agent 108, can perform comparisons, such as string match comparisons, value comparisons, hash comparisons, and/or other types of comparisons on event data 122 for one or more events, and produce new event data 122 based on results of the comparisons. For example, an instance of the compute engine 102 can process event data 122 in an event stream using refinements and/or compositions of a fundamental model according to instructions provided in a configuration 132. Refinement operations 202 and composition operations 302 that instances of the compute engine 102 can use are discussed below with respect to FIGS. 2-4.

FIG. 2 is a flow chart 200 that depicts an example of a refinement operation 202 that can be performed by an instance of the compute engine 102. A refinement operation 202 can have filter criteria that the compute engine 102 can use to identify event data 122 that the refinement operation 202 applies to. For example, the filter criteria can define target attributes, values, and/or data elements that are to be present in event data 122 for the refinement operation 202 to be applicable to that event data 122. In some examples, filter criteria for a refinement operation 202 can indicate conditions associated with one or more fields of event data 122, such as the filter criteria is satisfied if a field holds an odd numerical value, if a field holds a value in a certain range of values, or if a field holds a text string matching a certain regular expression. When the compute engine 102 performs comparisons indicating that event data 122 matches the filter criteria for a particular refinement operation 202, the refinement operation 202 can create new refined event data 204 that includes at least a subset of data elements from the original event data 122.

For example, if the compute engine 102 is processing event data 122 as shown in FIG. 2, and the event data 122 includes data elements that match criteria for a particular refinement operation 202, the refinement operation 202 can create refined event data 204 that includes a least a subset of data elements selected from event data 122. In some examples, the data elements in the refined event data 204 can be selected from the original event data 122 based on a context collection format 136. A refinement operation 202 can accordingly result in a reduction or a down-selection of event data 122 in an incoming event stream to include refined event data 204 containing a subset of data elements from the event data 122.

As a non-limiting example, event data 122 in an event stream may indicate that a process was initiated on a client device 104. A refinement operation 202 may, in this example, include filter criteria for a string comparison, hash comparison, or other type of comparison that can indicate creations of web browser processes. Accordingly, the refinement operation 202 can apply if such a comparison indicates that the created process was a web browser process. The compute engine 102 can accordingly extract data elements from the event data 122 indicating that the initiated process is a web browser, and include at least those data elements in newly generated refined event data 204.

In some examples, new refined event data 204 can be added to an event stream as event data 122, such as the same and/or a different event stream that contained the original event data 122. Accordingly, other refinement operations 202 and/or composition operations 302 can operate on the original event data 122 and/or the new refined event data 204 from the event stream.

FIG. 3 is a flowchart 300 that depicts an example of a composition operation 302 that can be performed by an instance of the compute engine 102. A composition operation 302 can have criteria that the compute engine 102 can use to identify event data 122 that the composition operation 302 applies to. The criteria for a composition operation 302 can identify at least one common attribute that, if shared by two pieces of event data 122, indicates that the composition operation 302 applies to those two pieces of event data 122. For example, the criteria for a composition operation 302 can indicate that the composition operation 302 applies to two pieces of event data 122 when the two pieces of event data 122 are associated with child processes that have the same parent process.

The compute engine 102 can accordingly use comparison operations to determine when two pieces of event data 122 from one or more event streams meet criteria for a composition operation 302. When two pieces of event data 122 meet the criteria for a composition operation 302, the composition operation 302 can generate new composition event data 304 that contains data elements extracted from both pieces of event data 122. In some examples, the data elements to be extracted from two pieces of event data 122 and used to create the new composition event data 304 can be based on a context collection format 136.

As an example, when first event data 122A and second event data 122B shown in FIG. 3 meet criteria of the composition operation 302, the composition event data 304 can be generated based on a context collection format 136 to include data elements from the first event data 122A and from the second event data 122B. In some examples, the context collection format 136 for the composition event data 304 can include a first branch or portion of data elements extracted from the first event data 122A, and include a second branch or portion of data elements extracted from the second event data 122B. Accordingly, while the first event data 122A and the second event data 122B may be formatted according to a first context collection format 136, or according to different context collection formats 136, the composition event data 304 can be generated based on another context collection format 136 that is different from the context collection formats 136 of the first event data 122A and the second event data 122B, but identifies at least a subset of data elements from each of the first event data 122A and the second event data 122B.

In some examples, new composition event data 304 created by a composition operation 302 can be added to an event stream as event data 122, such as the same and/or a different event stream that contained original event data 122 used by the composition operation 302. Accordingly, other refinement operations 202 and/or composition operations 302 can operate on the original event data 122 and/or the new composition event data 304 from the event stream.

A composition operation 302 can be associated with an expected temporally ordered arrival of two pieces of event data 122. For example, the composition operation 302 shown in FIG. 3 can apply when first event data 122A arrives at a first point in time and second event data 122B arrives at a later second point in time. Because the first event data 122A may arrive before the second event data 122B, a rally point 306 can be created and stored when the first event data 122A arrives. The rally point 306 can then be used if and when second event data 122B also associated with the rally point 306 arrives at a later point in time. For example, a composition operation 302 can be defined to create new composition event data 304 from a child process and its parent process, if the parent process executed a command line. In this example, a rally point 306 associated with a first process can be created and stored when first event data 122A indicates that the first process runs a command line. At a later point, new event data 122 may indicate that a second process, with an unrelated parent process different from the first process, is executing. In this situation, the compute engine 102 can determine that a stored rally point 306 associated with the composition does not exist for the unrelated parent process, and not generate new composition event data 304 via the composition operation 302. However, if further event data 122 indicates that a third process, a child process of the first process, has launched, the compute engine 102 would find the stored rally point 306 associated with the first process and generate the new composition event data 304 via the composition operation 302 using the rally point 306 and the new event data 122 about the third process.

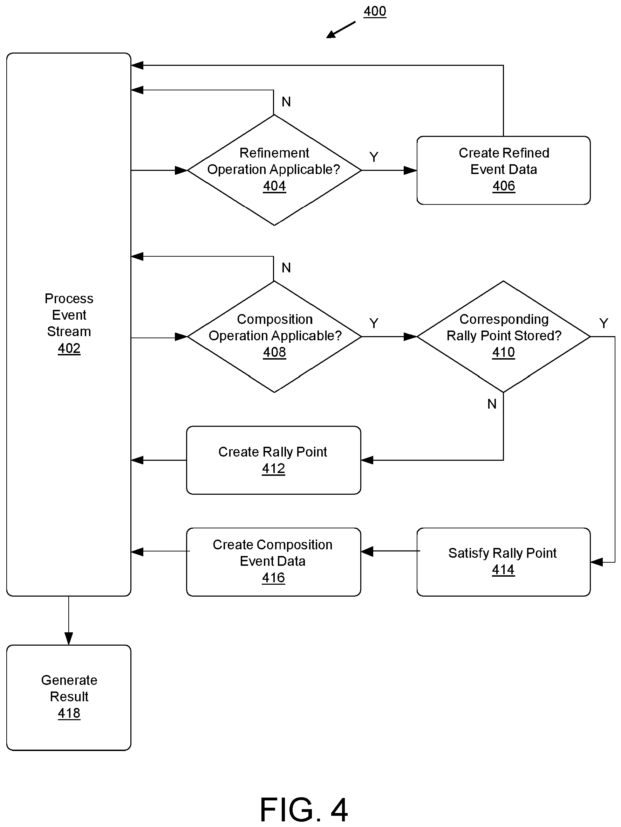

FIG. 4 depicts a flowchart 400 of example operations that can be performed by an instance of the compute engine 102 in the distributed security system 100. At block 402, the compute engine 102 can process an event stream of event data 122. The event data 122 may have originated from an event detector 124 of a security agent 108 that initially detected or observed the occurrence of an event on a client device 104, and/or may be event data 122 that has been produced using refinement operations 202 and/or composition operations 302 by the compute engine 102 or a different instance of the compute engine 102. In a local instance of the compute engine 102 (i.e., an instance of compute engine 102 operating on a client device), in some examples the event stream may be received from a bus 126 or local memory on a client device 104. In a cloud instance of the compute engine 102, in some examples the event stream may be received via the storage engine 116.

At block 404, the compute engine 102 can determine whether a refinement operation 202 applies to event data 122 in the event stream. As discussed above, the event data 122 may be formatted according to a context collection format 136, and accordingly contain data elements or other information according to an ontological definition 134 of the context collection format 136. A refinement operation 202 may be associated with filter criteria that indicates whether information in the event data 122 is associated with the refinement operation 202. If information in the event data 122 meets the filter criteria, at block 406 the compute engine 102 can generate refined event data 204 that includes a filtered subset of the data elements from the event data 122. The compute engine 102 can add the refined event data 204 to the event stream and return to block 402 so that the refined event data 204 can potentially be processed by other refinement operations 202 and/or composition operations 302.

At block 408, the compute engine 102 can determine if a composition operation 302 applies to event data 122 in the event stream. As discussed above with respect to FIG. 3, the compute engine 102 may have criteria indicating when a composition operation 302 applies to event data 122. For example, the criteria may indicate that the composition operation 302 applies when event data 122 associated with a child process of a certain parent process is received, and/or that the composition operation 302 expects first event data 122 of a child process of the parent process to be received followed by second event data 122 of a child process of the parent process. If a composition operation 302 is found to apply to event data 122 at block 408, the compute engine 102 can move to block 410.

At block 410, the compute engine 102 can determine if a rally point 306 has been generated in association with the event data 122. If no rally point 306 has yet been generated in association with the event data 122, for example if the event data 122 is the first event data 122A as shown in FIG. 3, the compute engine 102 can create a rally point 306 at block 412 to store at least some portion of the event data 122, and the compute engine 102 can return to processing the event stream at block 402.

However, if at block 410 the compute engine 102 determines that a rally point 306 associated with the event data 122 has already been created and stored, for example if the event data 122 is the second event data 122B shown in FIG. 3 and a rally point 306 was previously generated based on earlier receipt of the first event data 122A shown in FIG. 3, the rally point 306 can be satisfied at block 414. The compute engine 102 can satisfy the rally point at block 414 by extracting data from the rally point 306 about other previously received event data 122, and in some examples by decrementing a reference count, removing data from a queue, and/or deleting the rally point 306 or marking the rally point 306 for later deletion. At block 416, the compute engine 102 can use the data extracted from the rally point 306 that had been taken from earlier event data 122, along with data from the newly received event data 122, to generate new composition event data 304. The compute engine 102 can add the composition event data 304 to the event stream and return to block 402 so that the composition event data 304 can potentially be processed by refinement operations 202 and/or other composition operations 302.

At block 418, the compute engine 102 can generate a result from event data 122 in the event stream. For example, if the event stream includes, before or after refinement operations 202 and/or composition operations 302, event data 122 indicating that one or more events occurred that match a behavior pattern 142, the compute engine 102 can generate and output a result indicating that there is a match with the behavior pattern 142. In some examples, the result can itself be new event data 122 specifying that a behavior pattern 142 has been matched. The generated results may be stored in storage engine 116, for example, for input to an instance of compute engine 102 or an instance of predictions engine 120.

For example, if event data 122 in an event stream originally indicates that two processes were initiated, refinement operations 202 may have generated refined event data 204 indicating that those processes include a web browser parent process that spawned a notepad child process. The refined event data 122 may be reprocessed as part of the event stream by a composition operation 302 that looks for event data 122 associated with child processes spawned by web browser parent process. In this example, the composition operation 302 can generate composition event data 304 that directly indicates that event data 122 associated with one or more child processes spawned by the same parent web browser process has been found in the event stream. That new composition event data 304 generated by the composition operation may be a result indicating that there has been a match with a behavior pattern 142 associated with a web browser parent process spawning both a child notepad process.

In some examples, when a result indicates a match with a behavior pattern 142, the compute engine 102, or another component of the distributed security system 100, can take action, such as to nullify a security threat associated with the behavior pattern 142. For instance, a local security agent 108 can block events associated with malware or cause the malware to be terminated. However, in other examples, when a result indicates a match with a behavior pattern 142, the compute engine 102 or another component of the distributed security system 100 can perform additional operations, such as predictions engine 120 applying the result to one or more machine learning models to predict malicious behavior, alerting users, sending notifications, and/or taking other actions without directly attempting to nullify a security threat. In some examples, the distributed security system 100 can allow users or client devices 104 to define how the distributed security system 100 responds when a result indicates a match with a behavior pattern 142. In situations in which event data 122 has not matched a behavior pattern 142, the result generated at block 418 can be an output of the processed event stream to another element of the distributed security system 100, such as to the security network 106 and/or to another instance of the compute engine 102, and/or to an instance of predictions engine 120.

As shown in FIG. 4 a compute engine 102 can process event data 122 in an event stream using one or more refinement operations 202 and/or one or more composition operations 302 in any order and/or in parallel. Accordingly, the order of the refinement operation 202 and the composition operation 302 depicted in FIG. 4 is not intended to be limiting. For instance, as discussed above, new event data 122 produced by refinement operations 202 and/or composition operations 302 can be placed into an event stream to be processed by refinement operations 202 and/or composition operations 302 at the same instance of the compute engine 102, and/or be placed into an event stream for another instance of the compute engine 102 for additional and/or parallel processing.

### Bounding Manager

FIG.5 depicts at 500 an example data flow in a bounding manager 128 of a security agent 108 or security network 106. The bounding manager is described in greater detail in U.S. Patent Application is related to U.S. Patent Application Number 16/849,543, entitled "Distributed Digital Security System" filed April 15, 2020. The bounding manager 128 can be a gatekeeper within a local security agent 108 that controls how much and/or what types of event data 122 the security agent 108 sends to the security network 106. Likewise, the bounding manager 128 can be a gatekeeper within the security network 106 to control how much and/or what types of event data 122 are sent between instances of elements or components within the security network 106. Although event detectors 124, a compute engine 102, and/or other elements of the security agent 108 add event data 122 to a bus 126 or other memory location such that a communication component 130 can send that event data 122 to the security network 106, a bounding manager 128 may limit the amount and/or types of event data 122 that is ultimately sent to the security network 106. For example, a bounding manager 128 can intercept and/or operate on event data 122 on a bus 126 and make a determination as to whether the communication component 130 should, or should not, actually send the event data 122 to the security network 106. Likewise, a bounding manager 128 in the security network 106 may limit the amount and/or types of event data 122 that is transferred between elements in the security network 106. For example, a bounding manager 128 can intercept and/or operate on event data 122 and make a determinization as to whether an element, such as compute engine 102, should, or should not, actually send the event data 122 to another element in the security network 106, such as another instance of compute engine 102 or an instance of predictions engine 120.

For example, when a security agent 108 is processing networking events associated with one or more processes running on a client device 104, a bounding manager 128 in the security agent 108 may limit event data 122 that is sent to the security network 106 to only include information about unique four-tuples in network connection events, data about no more than a threshold number of networking events per process, data about no more than a threshold number of networking events per non-browser process, no more than a threshold number of networking events per second, or data limited by any other type of limitation.

As another example, if a security agent 108 detects three hundred networking events per minute that occur on a client device 104, but the bounding manager 128 is configured to allow no more than one hundred networking events per minute to be sent to the security network 106, the bounding manager 128 may accordingly limit the security agent 108 to sending event data 122 about a sample of one hundred networking events drawn from the full set of three hundred networking events, and thereby avoid submitting event data 122 about the full set of three hundred networking events to the security network 106. This can reduce how much event data 122 cloud elements of the distributed security system 100 store and/or process, while still providing event data 122 to the cloud elements of the distributed security system 100 that may be relevant to, and/or representative of, activity of interest that is occurring on the client device 104.

In some examples, event data 122 intercepted and operated on by the bounding manager 128 can be original event data 122 about events observed or detected on the client device 104 by one or more event detectors 124 of the security agent 108. In other examples, event data 122 intercepted and operated on by the bounding manager 128 can be event data 122 produced by a local or cloud instance of the compute engine 102, such as event data 122 produced by refinement operations 202 and/or composition operations 302. In some examples, the bounding manager 128 can be an enhancer located on a bus 126 that can intercept or operate on event data 122 from the bus 126 before the event data 122 reaches other elements of the security agent 108 that may operate on the event data 122.

With reference to chart 500 in FIG. 5, bounding manager 128 can operate according to bounding rules provided by the bounding service 118 in one or more configurations 132. In some examples, configurations 132 for a bounding manager 128 can be sent from the security network 106 as one or more channel files. Bounding rules can be defined through one or more selectors 502 that can be implemented by a bounding manager 128, such that a bounding manager 128 can apply bounding rules by processing event data 122 from an event stream using one or more associated selectors 502. As discussed above, a bounding manager 128 can be provided with a configuration 132 generated based on an ontological definition 134 of a context collection interface 138, such that the bounding manager 128 can process event data 122 formatted using any context collection format 136 that includes at least the data elements of the context collection interface 138, if an interface fulfillment map 140 corresponds to the context collection format 136 and the context collection interface 138.

As noted above, bounding rules can be defined through one or more selectors 502 that a bounding manager 128 can apply by processing event data 122 from an event stream using one or more selectors 502 associated with the event data 122. Each selector 502 can be associated with reporting criteria 504, markup 506, and/or a priority value 508. Each selector 502 can be an algorithm that can generate an independent reporting recommendation 510 about whether a piece of event data 122 should be sent to, or transferred within, the security network 106. In some examples, different selectors 502 can operate on the same piece of event data 122 and provide conflicting reporting recommendations 510 about that piece of event data 122. However, the bounding manager 128 can include a priority comparer 512 that can evaluate priority values 508 associated with the different selectors 502 and/or their reporting recommendations 510 to make a final decision about whether or not to send the piece of event data 122 to, or transfer the piece of event data within, the security network 106. The bounding manager 128 can also include a counting engine 514 that can track statistical data 516 about event data 122.

Individual selectors 502 may operate on event data 122, or groups of event data 122 based on attributes in the event data 122. For example, a selector 502 can be configured to operate on individual event data 122 or a group of event data 122 when the event data 122 includes a certain process ID, is associated with a certain behavior pattern 142, includes a certain keyword or other target value, matches a certain event type, and/or matches any other attribute associated with the selector 502. As an example, a selector 502 can be configured to operate on event data 122 when the event data 122 is for a DNS request about a specific domain name. However, a piece of event data 122 may include attributes that match multiple selectors 502, such that more than one selector 502 can operate on that piece of event data 122. For example, event data 122 for a DNS request to a certain domain name may be operated on by a first selector 502 associated with all networking events, a second selector 502 associated more specifically with DNS requests, and a third selector 502 specifically associated with that domain name.

A reporting recommendation 510 generated by a selector 502 can be based on reporting criteria 504 associated with that selector 502. A selector's reporting recommendation 510 can be a positive, a negative, or a neutral recommendation. In some examples, reporting criteria 504 for a selector 502 can include upper and/or lower bounds of reporting rates or overall counts regarding how much of a certain type of event data 122 should be sent to the security network 106. For example, reporting criteria 504 can indicate that event data 122 about a certain type of event should be sent to the security network 106 at least fifty times an hour, but no more than three hundred times an hour. As another example, reporting criteria 504 can indicate that a sample of five hundred instances of a certain type of event data 122 should be sent to the security network 106, after which no more instances of that type of event data 122 need be sent to the security network 106. Accordingly, the counting engine 514 can track statistical data 516 associated with one or more individual selectors 502 about how much corresponding event data 122 has been sent to the security network 106, such that a selector 502 can use the statistics to determine if new event data 122 meets reporting criteria 504 when making a reporting recommendation 510.

If a selector 502 generates a positive reporting recommendation 510 for a piece of event data 122, the selector 502 can also add markup 506 associated with the selector 502 to the event data 122. The markup 506 can be a reason code, alphanumeric value, text, or other type of data that indicates why the selector 502 recommended that the event data 122 be sent to the security network 106. Each selector 502 that generates a positive reporting recommendation 510 for a piece of event data 122 can add its own unique markup to the event data 122. Accordingly, if more than one selector 502 recommends sending a piece of event data 122 to the security network 106, the piece of event data 122 can be given markup 506 indicating more than one reason why the piece of event data 122 is being recommended to be sent to the security network 106. In some examples, markup 506 from different selectors 502 can be aggregated into a bitmask or other format that is sent to the security network 106 as part of, or in addition to, the event data 122.

Each selector 502 can also provide a priority value 508 along with its reporting recommendation 510, whether the reporting recommendation 510 is positive, negative, or neutral. In some examples, the priority value 508 associated with a selector 502 can be a static predefined value. For instance, a selector 502 may be configured to always make a reporting recommendation 510 with a specific priority value 508. In other examples, the priority value 508 associated with a selector 502 can be dynamically determined by the selector 502 based on an analysis of event data 122 and/or statistical data 516. For example, if a selector's reporting criteria 504 has a lower bound indicating that at least one hundred pieces of a type of event data 122 should be sent to the security network 106 per hour, but statistical data 516 indicates that only ten pieces of that type of event data 122 have been sent to the security network 106 during the current hour, the selector 502 can produce a positive reporting recommendation 510 with a high priority value 508 in an attempt to increase the chances that the event data 122 is ultimately sent to the security network 106 and the lower bound of the selector's reporting criteria 504 will be met. In contrast, if the statistical data 516 instead indicates that seventy-five pieces of that type of event data 122 have been sent to the security network 106 during the current hour, and thus that the lower bound of the selector's reporting criteria 504 is closer to being met, the selector 502 can produce a positive reporting recommendation 510 with a lower priority value 508.

### Storage Engine

FIG. 6 depicts at 600 an example of data flow in a storage engine 116 of the security network 106. An input event stream 602 of event data 122 sent to the security network 106 by one or more local security agents 108 can be received by a storage engine 116 in the security network 106, as shown in FIG. 1. In some examples, security agents 108 can send event data 122 to the security network 106 over a temporary or persistent connection, and a termination service or process of the distributed security system 100 can provide event data 122 received from multiple security agents 108 to the storage engine 116 as an input event stream 602.

The event data 122 in the input event stream 602 may be in a random or pseudorandom order when it is received by the storage engine 116. For example, event data 122 for different events may arrive at the storage engine 116 in the input event stream 602 in any order without regard for when the events occurred on client devices 104. As another example, event data 122 from security agents 108 on different client devices 104 may be mixed together within the input event stream 602 when they are received at the storage engine 116, without being ordered by identifiers of the security agents 108. However, the storage engine 116 can perform various operations to sort, route, and/or store the event data 122 within the security network 106.

The storage engine 116 can be partitioned into a set of shards 604. Each shard 604 can be a virtual instance that includes its own resequencer 606, topic 608, and/or storage processor 610. Each shard 604 can also be associated with a distinct cloud instance of the compute engine 102. For example, if the storage engine 116 includes ten thousand shards 604, there can be ten thousand resequencers 606, ten thousand topics 608, ten thousand storage processors 610, and ten thousand cloud instances of compute engines 102.

Each shard 604 can have a unique identifier, and a particular shard 604 can be associated with one or more specific security agents 108. In some examples, a particular instance of the compute engine 102 can be associated with a specific shard 604, such that it is configured to process event data 122 from specific security agents 108 associated with that shard 604. However, in some examples, cloud instances of the compute engine 102 can also be provided that are specifically associated with certain rally points 306 associated with corresponding composition operations 302, such that the cloud instances of the compute engine 102 can execute composition operations 302 that may expect or process different pieces of event data 122 generated across one or more client devices 104 using such rally points 306.

Resequencers 606 of one or more shards 604 can operate in the storage engine 116 to sort and/or route event data 122 from the input event stream 602 into distinct topics 608 associated with the different shards 604. The topics 608 can be queues or sub-streams of event data 122 that are associated with corresponding shards 604, such that event data 122 in a topic 608 for a shard 604 can be processed by a storage processor 610 for that shard 604.

In some examples, event data 122 from the input event stream 602 can be received by one resequencer 606 in a cluster of resequencers 606 that are associated with different shards 604. That receiving resequencer 606 can determine, based on an AID or other identifier of the security agent 108 that sent the event data 122, whether that resequencer 606 is part of the shard 604 that is specifically associated with that security agent 108. If the receiving resequencer 606 is part of the shard 604 associated with the sending security agent 108, the resequencer 606 can route the event data 122 to the topic 608 for that shard 604. If the resequencer 606 that initially receives event data 122 determines that it is not part of the shard 604 associated with the sending security agent 108, the resequencer 606 can forward the event data 122 to a different resequencer 606 that is part of the shard 604 associated with the sending security agent 108. In some examples, a resequencer 606 can send event data 122 to another resequencer 606 via a remote procedure command (RPC) connection or channel.

A resequencer 606 can determine whether event data 122 is associated with the shard 604 of the resequencer 606, or is associated with a different shard 604, based on an identifier, such as an AID, of the security agent 108 that sent the event data 122. For example, the resequencer 606 can perform a modulo operation to divide an AID value in event data 122 by the number of shards 604 in the storage engine 116, find the remainder of the division, and find a shard 604 with an identifier that matches the remainder. As an example, when there are ten thousand shards 604 in the storage engine 116 and a remainder of a modulo operation on a security agent's AID is "60," the resequencer 606 can determine that the security agent 108 is associated with a shard 604 having an identifier of "60." If that resequencer 606 is part of shard "60," the resequencer 606 can route the event data 122 to a topic 608 associated with shard "60." However, if the resequencer 606 is not part of shard "60," the resequencer 606 can use an RPC connection or other type of connection to forward the event data 122 to another resequencer 606 that is associated with shard "60."

In some examples, a resequencer 606 may also order event data 122 by time or any other attribute before outputting a batch of such ordered event data 122 in a topic 608 to a corresponding storage processor 610. For example, when a resequencer 606 determines that it is the correct resequencer 606 for event data 122, the resequencer 606 can temporarily place that event data 122 in a buffer of the resequencer 606. Once the size of data held in the buffer reaches a threshold size, and/or event data 122 has been held in the buffer for a threshold period of time, the resequencer 606 can re-order the event data 122 held in the buffer by time or any other attribute, and output a batch of ordered event data 122 from the buffer to a topic 608.

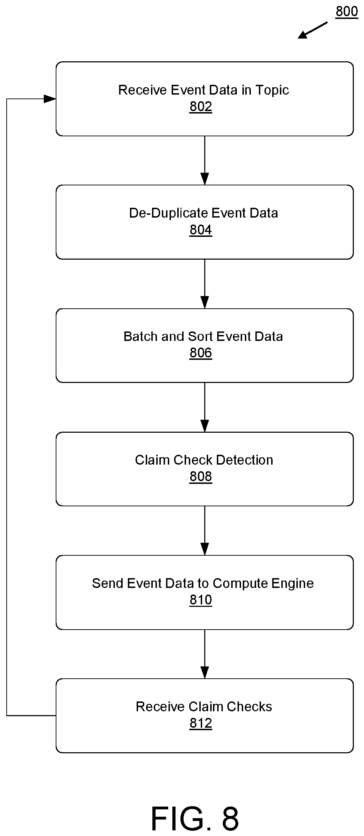

After event data 122 from the input event stream 602 has been sorted and partitioned by resequencers 606 into topics 608 of different shards 604, storage processors 610 of those different shards 604 can further operate on the event data 122. Example operations of a storage processor 610 are described below with respect to FIG. 8. In some examples, a single processing node 612, such as a server or other computing element in the security network 106, can execute distinct processes or virtual instances of storage processors 610 for multiple shards 604.

After a storage processor 610 for a shard 604 has operated on event data 122, the storage processor 610 can output event data 122 to a corresponding cloud instance of the compute engine 102 associated with the shard 604. In some examples, each storage processor 610 executing on a processing node 612 can initiate, or be associated, with a corresponding unique instance of the compute engine 102 that executes on the same processing node 612 or a different processing node 612 in the security network 106. As described further below, in some examples the storage processor 610 can also output event data 122 to short-term and/or long-term storage 614, and/or to an emissions generator 616 that prepares an output event stream 618 to which other cloud elements of the distributed security system 100 can subscribe, such as instances of predictions engine 120.

FIG. 7 at 700 depicts an example of a storage processor 610 sending event data 122 to a corresponding compute engine 102. As described above, the compute engine 102 can process incoming event data 122 based on refinement operations 202, composition operations 302, and/or other operations. However, in some examples, the compute engine 102 may not initially be able to perform one or more of these operations on certain event data 122. For example, if a particular operation of the compute engine 102 compares attributes in event data 122 about different processes to identify which parent process spawned a child process, the compute engine 102 may not be able to perform that particular operation if the compute engine 102 has received event data 122 about the child process but has not yet received event data 122 about the parent process.

In these types of situations, in which the compute engine 102 receives first event data 122 but expects related second event data 122 to arrive later that may be relevant to an operation, the compute engine 102 can issue a claim check 702 to the storage processor 610. The claim check 702 can indicate that the compute engine 102 is expecting second event data 122 to arrive that may be related to first event data 122 that has already arrived, and that the storage processor 610 should resend the first event data 122 to the compute engine 102 along with the second event data 122 if and when the second event data 122 arrives. In some examples, the claim check 702 can identify the first and/or second event data 122 using a key, identifier, string value, and/or any other type of attribute.

Accordingly, once a compute engine 102 has sent a claim check 702 for second event data 122 that may be related to first event data 122, the compute engine 102 may be configured to disregard the first event data 122 if and until the related second event data 122 arrives or a threshold period of time passes. For example, if the storage processor 610 determines that second event data 122 corresponding to a claim check 702 has arrived, the storage processor 610 can send that second event data 122 to the compute engine 102 along with another copy of the first event data 112 such that the compute engine 102 can process the first event data 122 and the second event data 122 together. As another example, the storage processor 610 may wait for the expected second event data 122 for a threshold period of time, but then resend the first event data 122 to the compute engine 102 if the threshold period of time passes without the expected second event data 122 arriving. Accordingly, in this situation the compute engine 102 can move forward with processing the first event data 122 without the second event data 122.

In some examples, claim checks 702 can be processed by the storage engine and/or the compute engine 102 at runtime, for example when claim checks 702 are issued, to determine dependencies between claim checks 702, and to determine when claim checks 702 are satisfied. In contrast, in some examples, the rally points 306 discussed above with respect to composition operations 302 executed by compute engines 102 can be evaluated and determined at compile time, such as to generate configurations 132 for compute engines 102 that define storage requirements for rally points 306 and indicate triggers and other instructions for when and how to create rally points 306.

FIG. 8 depicts a flowchart 800 of example operations that can be performed by a storage processor 610 in a storage engine 116. At block 802, the storage processor 610 can receive event data 122 in a topic 608 from a resequencer 606.

At block 804, the storage processor 610 can perform de-duplication on the event data 122 from the topic 608. For example, if the topic 608 contains duplicate copies of certain event data 122, and/or the storage processor 610 already operated on another copy of that event certain event data 122 in the past, the duplicate copy can be discarded from the storage engine 116 and not be processed further by the distributed security system 100. Here, because event data 122 is sorted and routed into topics 608 and corresponding storage processors 610 based on an identifier of the security agent 108 that sent the event data 122, copies of the same event data 122 can be routed to the same storage processor 610. Accordingly, there can be a confidence level that different storage processors 610 are not operating on separate copies of the same event data 122, and that the particular storage processor 610 associated with event data 122 from a particular security agent 108 can safely discard extra copies of duplicated event data 122 from that particular security agent 108.

At block 806, the storage processor 610 can perform batching and/or sorting operations on event data 122 from a topic 608. For example, even if a resequencer 606 for a shard 604 released batches of event data 122 into a topic 608, and each individual batch from the resequencer 606 was sorted by time, a first batch may contain event data 122 about an event that occurred on a client device 104 after an event described by event data 122 in a second batch. Accordingly, the storage processor 610 can reorder the event data 122 from the topic if they are not fully in a desired order. The storage processor 610 can also sort and/or batch event data 122 from a topic 608 based on event type, behavior type, and/or any other attribute.

At block 808, the storage processor 610 can detect if any event data 122 received via the topic 608 matches a claim check 702 previously issued by the compute engine 102. As discussed above, the compute engine 102 can issue claim checks 702 for event data 122 expected to arrive at later points in time. Accordingly, at block 808, storage processor 610 can determine if matches are found for any pending claims checks 702. If newly received event data 122 matches an existing claim check 702, the storage processor 610 can retrieve any other event data 122 that corresponds to the claim check 702 and prepare to send both the newly received event data 122 and the other corresponding event data 122 to the compute engine 102 at block 810. For example, if a compute engine 102, after receiving first event data 122, issued a claim check 702 for second event data 122 related to the first event data 122, and the storage processor 610 determines at block 808 that the second event data 122 has arrived, the storage processor 610 can retrieve the first event data 122 from storage 614 or other memory and prepare to send both the first event data 122 and the second event data 122 to the compute engine 102 at block 810.

As discussed above, in some examples the storage processor 610 can build a dependency graph or other representation of multiple related claim checks 702. Accordingly, at block 808 the storage processor 610 can use a dependency graph or other representation of related claim checks 702 to determine if related claim checks 702 have been satisfied. If event data 122 has arrived that satisfy dependent or related claim checks 702, the storage processor 610 can prepare to send the corresponding related event data 122 to the compute engine 102 at block 810.

At block 810, the storage processor 610 can send event data 122 to the compute engine 102. As noted above, the event data 122 sent at block 810 can include both new event data 122 from a topic as well as any older event data 122 that is to be resent to the compute engine 102 based on one or more claim checks 702. In some examples, the storage processor 610 can use an RPC connection or channel to send a batch or stream of event data 122 to the compute engine 102.

At block 812, the storage processor 610 can receive and/or register new claim checks 702 from the compute engine 102. The storage processor 610 can then return to block 802 to receive new event data 122 from the topic 608.

The order of the operations shown in FIG. 8 is not intended to be limiting, as some of the operations may occur in parallel and/or different orders. For example, a storage processor 610 can receive and/or register new claim checks 702 from the compute engine 102 before, after, or while de-duplicating, sorting, and/or batching event data 122.

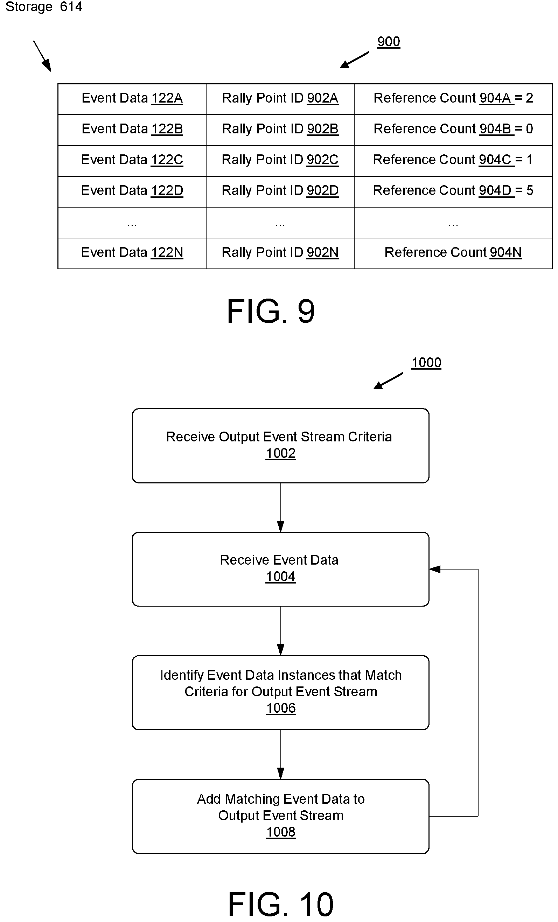

FIG. 9 depicts at 900 an example of event data 122 associated with a storage engine 116. As discussed above with respect to FIG. 6, event data 122 that has passed through storage processors 610 can be stored in short-term and/or long-term storage 614. In some examples, cloud instances of the compute engine 102 that operate on event data 122 and/or produce new event data 122 using refinement operations 202, composition operations 302, and/or other operations such as query operations can also output processed event data 122 to be stored in the storage 614, either directly or through the storage processors 610. The storage 614 can include one or more memory devices, and the event data 122 can be stored in a database or other structure in the storage 614. Other cloud elements of the distributed security system 100 can consume, or subscribe to, the event data 122, such as instances of predictions engine 120.

Each piece of event data 122 can be stored in the storage 614 so that it is available to be retrieved and used by elements of the distributed security system 100. For example, when a storage processor 610 receives a claim check 702 from a compute engine 102 for a second piece of event data 122 that is expected to arrive in relation to a first piece of event data 122 that has already arrived, the storage processor 610 may store the first piece of event data 122 in storage 614 at least temporarily. When the second piece of event data 122 arrives and the claim check 702 is satisfied, or a threshold time period associated with the claim check 702 expires, the storage processor 610 can retrieve the first piece of event data 122 from the storage and resend it to the compute engine 102.

As another example, compute engines 102 and/or other elements of the distributed security system 100 such as instances of predictions engine 120 can query the storage 614 to retrieve stored event data 122. For instance, although a certain cloud instance of the compute engine 102 may be associated with one or more specific security agents 108, that cloud instance of the compute engine 102 may query the storage 614 to retrieve event data 122 that originated from other security agents 108 on client devices 104 that are not associated with that cloud instance of the compute engine 102. Accordingly, a cloud instance of the compute engine 102 may be able to access event data 122 from multiple security agents 108 via the storage 614, for instance to detect when events occurring collectively on multiple client devices 104 match a behavior pattern 142. In other examples, elements of the distributed security system 100 such as instances of predictions engine 120 can submit queries to the storage engine 116 to obtain event data 122 based on search terms or any other criteria. In some examples, the storage engine 116 can expose an application programming interface (API) through which elements of the distributed security system 100 can submit queries to retrieve event data 122 stored in the storage 614.

In some examples, rally point identifiers 902 can be stored in the storage 614 in conjunction with pieces of event data 122. As noted above, in some examples certain cloud instances of the compute engine 102 can be associated with certain rally points 306, such that the cloud instances of the compute engine 102 can execute composition operations 302 associated with those rally points 306 based on event data 122 received from one or more client devices 104. Event data 122 can be stored in the storage 614 association with the rally point identifiers 902 that correspond with different rally points 306 handled by different cloud instances of the compute engine 102. Accordingly, based on rally points identifiers 902, stored event data 122 associated with rally points 306 can be forwarded to a corresponding cloud instances of the compute engine 102 or other elements associated with those rally points 306. Accordingly, a cloud instance of the compute engine 102 that executes a composition operation associated with a particular rally point 306 can receive event data 122 from the storage engine 116 that may lead to the creation or satisfaction of that rally point 306 as discussed above with respect to FIG. 3.

In some examples, the storage engine 116 can respond to a query from another element of the distributed security system 100, such as an instances of predictions engine 120, by providing filtered event data 122 that includes less than the full set of fields stored for a piece of event data 122. As discussed above, event data 122 can be formatted according to a context collection format 136 defined by an ontological definition 134, and in some examples the ontological definition 134 can assign authorization level values to each field of a data type on a field-by-field basis. For instance, some fields can be associated with a high authorization level, while other fields may be associated with one or more lower authorization levels. An element of the distributed security system 100, or a user of such an element, that has the high authorization level may accordingly receive all fields of the event data 122 from the storage engine 116, while another element or user with a lower authorization level may instead only receive a subset of the fields of the event data 122 that corresponds to that element or user's lower authorization level.

The storage 614 can also maintain reference counts 904 for each piece of event data 122. A reference count 904 for a piece of event data 122 can be a count of how many other pieces of event data 122 are related to and/or are dependent on that piece of event data 122. Processes that occur on client devices 104 may spawn, or be spawned from, other processes on client devices 104. Although a particular process may terminate on a client device 104 at a point in time, event data 122 about that particular process may remain relevant to evaluating event data 122 about parent or child processes of that particular process that may still be executing on the client device 104. Accordingly, a reference count 904 can be usedto count how many other pieces of event data 122 are related to or dependent on a certain piece of event data 122. The storage engine 116 can be configured to keep event data 122 that has a reference count 904 above zero, while occasionally or periodically deleting event data 122 that has a reference count 904 of zero.

FIG. 10 depicts a flowchart 1000 of an example process for an emissions generator 616 of the storage engine 116 to generate an output event stream 618 for one or more consumers, such as an instance of predictions engine 120. In some examples, event data 122 processed by one or more shards 604 or corresponding compute engines 102 can be passed to the emissions generator 616 in addition to, or instead of, being stored in the storage 614. For example, the emissions generator 616 can receive copies of event data 122 being output by storage processors to compute engines 102 and/or the storage 614, as well as new or processed event data 122 being output by compute engines 102 back to storage processors 610 and/or to the storage 614. The emissions generator 616 can be configured to use received event data 122 to produce and emit output event streams 618 for consumers. Each output event stream 618 can contain event data 122 that matches corresponding criteria, for example based on one or more shared attributes.

A consumer, such as the predictions engine 120 or another element of the security network 106, can subscribe to an output event stream 618 such that the element receives a live stream of incoming event data 122 that matches certain criteria. Accordingly, although an element of the security network 106 can query the storage engine 116 on demand to obtain stored event data 122 that matches the query, the element can also subscribe to an output event stream 618 produced by an emissions generator 616 to receive event data 122 that matches certain criteria in almost real time as that event data 122 is processed through the storage engine 116 and/or by compute engines 102. For example, if a user of the predictions engine 120 wants to receive event data 122 about a certain type of networking event that occurs across a set of client devices 104 as those events occur, the emissions generator 616 can generate and provide an output event stream 618 that includes just event data 122 for occurrences of that type of networking event that are received by the storage engine 116.

As an example, an emissions generator 616 can be configured to produce a customized output event stream 618 based on criteria indicating that a consumer wants a stream of event data 122 related to a process with a particular process ID that includes information about that process's parent and grandparent processes, the first five DNS queries the process made, and the first five IP connections the process made. Accordingly, the consumer can subscribe to that output event stream 618 to obtain matching event data 122 in almost real time as the event data 122 arrives at the storage engine 116, rather than using API queries to retrieve that from the storage 614 at later points in time.

At block 1002, the emissions generator 616 can receive criteria for an output event stream 618. In some examples, the criteria can be default criteria, such that the emissions generator 616 is configured to produce multiple default output event streams 618 using corresponding default criteria. However, the emissions generator 616 can also, or alternately, be configured to produce customized output event streams 618 using criteria defined by consumers, such as predictions engine 120, and as such the criteria received at block 1002 can be criteria for a customized output event stream 618.

At block 1004, the emissions generator 616 can receive event data 122 that has been processed by elements of one or more shards 604 and/or corresponding compute engines 102. In some examples, the emissions generator 616 can copy and/or evaluate such event data 122 as the event data 122 is being passed to the storage 614, and/or to or from instances of the compute engine 102.

At block 1006, the emissions generator 616 can identify event data 122 that matches criteria for an output event stream 618. In some examples, the emissions generator 616 can produce multiple output event stream 618 for different consumers, and the emissions generator 616 can accordingly determine if event data 122 matches criteria for different output event streams 618.

At block 1008, the emissions generator 616 can add the matching event data 122 to a corresponding output event stream 618. The output event stream 618 can be emitted by the storage engine 116 or otherwise be made available to other elements of the distributed security system 100, including consumers who have subscribed to the output event stream 618. The emissions generator 616 can return to loop through block 1004 to block 1008 to add subsequent event data 122 that matches criteria to one or more corresponding output event streams 618.

If event data 122 matches criteria for more than one output event stream 618 at block 1006, the emissions generator 616 can add the matching event data 122 to multiple corresponding output event streams 618. If event data 122 does not match any criteria for any output event stream 618, the emissions generator 616 can disregard the event data 122 such that it is not added to any output event streams 618.

### Predictions Engine

As noted above, digital security systems may find it challenging to process event data to accurately distinguish between legitimate or malicious or anomalous behavior in the event data, for example, because malware and threat actor behavior is rapidly changing. This is particularly true when evaluating event data for certain signatures of malicious or anomalous behavior, such as Indicators of Compromise (IOCs) or Indicators of Attack (IOA) since these indicators essentially are backward looking, and so identifying these indicators in event data only uncovers previously known malicious or anomalous behavior. What is needed, and provided by the example embodiments described below, is an evaluation of event data for indicators of behavior (IOB) that focuses on what users and applications are doing - their behavior - to uncover new or previously unknown or undetected malicious or anomalous behavior. The phrase Endpoint Telemetry or Behavioral Telemetry may be used to describe sensors (security agents 108) on client computing devices 104 collecting telemetry data including behavioral information about user and/or application behavior and transmitting that telemetry data as event data 122 to security network 106. For example, Powershell abuse and process injection (techniques used to trigger fileless malware attacks) are just two in a growing list of tactics, techniques, and procedures (TTPs) which may be identified using endpoint telemetry. Once received at the security network 106, the event data 122 can be manipulated, enriched, analyzed, hypothesized, and predictions can be generated based on the analysis as to whether the event data 122 indicates a possible or likely or imminent security threat to the client computing devices 104. The predictions can be transmitted back to selected client computing devices 104 where the predictions can inform practices and generation of threat detection rules logic on the client computing devices 104 to more accurately counter or pre-empt the occurrence of new or repeated but previously undetected attacks or malicious or anomalous behavior.

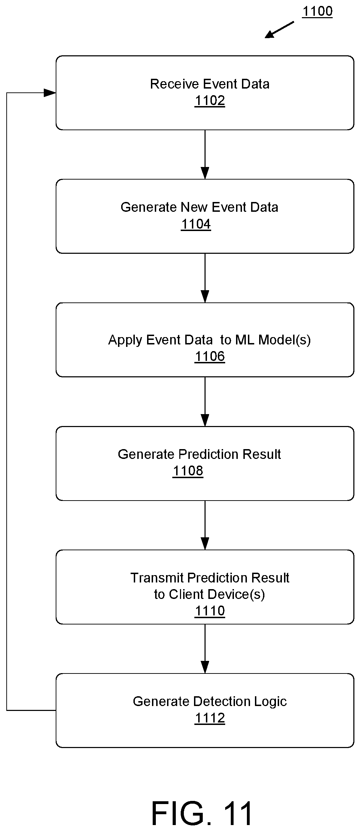

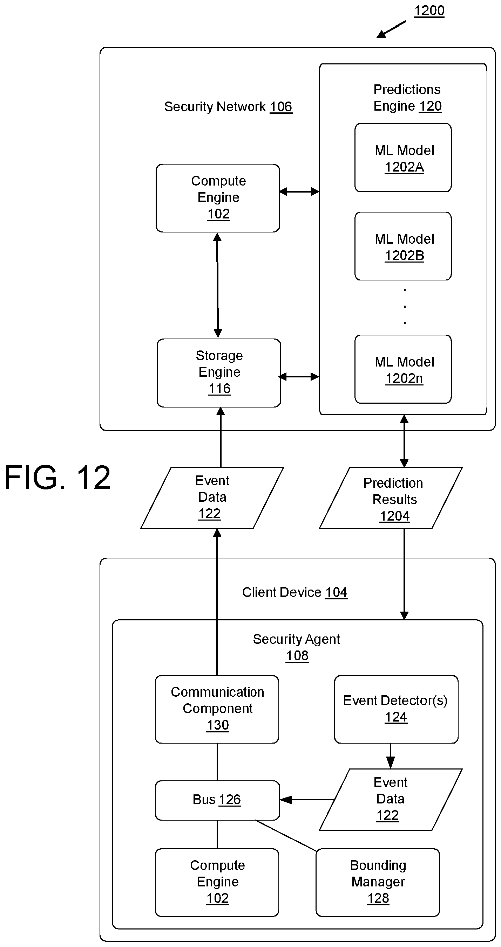

FIG. 11, with reference to FIG. 12, depicts a flowchart 1100 for the security network 106 to receive at block 1102 event data 122 from one or more client computing devices 104. The event data may comprise behavioral telemetry data. Compute engine 102 manipulates and/or enriches the event data at block 1104, and predictions engine 120 analyzes and/or hypothesizes about the event data at block 1106 via one or more machine learning models ML model 1202A, 1202B through 1202n. The predictions engine 120 generates predictions or inferences, based on the analysis, at block 1108 as to whether the event data indicates a possible or likely or imminent security threat to the client computing devices 104. The predictions engine 120 transmits the predictions at block 1110 to selected client computing devices 104 where the predictions can inform practices and generation at block 1112 of threat detection rules logic on the client computing devices 104 to more accurately counter or pre-empt the occurrence of new or repeated but previously undetected attacks or malicious or anomalous behavior.

With reference to block 1102, and as described above, in example embodiments, compute engines 102 on client computing devices 104 can receive from a compiler 114 of the security network 106, a configuration that includes a compiled set of executable instructions for processing event data 122, such as behavioral telemetry data, associated with occurrences of one or more events on or by one or more client computing devices 104. Other cloud elements such as the bounding service 118, can also generate configurations 132 for local instances (located on a client device 104) of the compute engine 102, as well as configurations for local bounding managers 128. Client devices 104 use these configurations to control components of security agent 108 such as event detectors 124, bounding manager 128, and local instances of compute engine 102, to receive and process event data, in particular, to capture and select what event data, e.g., to capture and select what behavioral telemetry data, to send to security network 106, and when to send such data to security network 106.

The ontology service 110 can store ontological definitions 134 that can be used by local instances of compute engine 102. For example, rules and other data included in configurations 132 for local instances of compute engine 102 can be based on ontological definitions 134 maintained at the ontology service 110. As discussed above, a piece of event data 122 that is generated by and/or processed by one or more components of the distributed security system 100 can be a "context collection" of data elements that is formatted and/or processed according to information stored at, and/or provided by, the ontology service 110. The ontological definitions 134 maintained at the ontology service can, for example, include definitions of context collection formats 136 and context collection interfaces 138. The ontology service 110 can also store interface fulfillment maps 140. Each interface fulfillment map 140 can be associated with a specific pairing of a context collection format 136 and a context collection interface 138.

An ontological definition 134 of a context collection format 136 can define data elements and/or a layout for corresponding event data 122. For example, an ontological definition 134 of a context collection format 136 can identify specific types of information, fields, or data elements that should be captured in event data 122 about a type of event that occurs on a client device 104. For example, although any number of attributes about an event that occurs on a client device 104 could be captured and stored in event data 122, an ontological definition 134 of a context collection format 136 can define which specific attributes about that event are to be recorded into event data 122 for further review and processing. Accordingly, event data 122 can be considered a context collection associated with a particular context collection format 136 when the event data 122 includes data elements as defined in an ontological definition 134 of that particular context collection format 136. Accordingly, local instances of compute engine 102 can transmit telemetry data as a context collection to security network 106.

With reference again to FIG. 11, block 1102, an instance of a compute engine 102 in the security network 106 can receive an event stream comprising event data 122 associated with an occurrence of one or more events on one or more client computing devices 104. As an example, the compute engine may receive event data 122 in the form or behavioral telemetry data from one or more client computing device 104. In example embodiments, the compute engine 102 may receive the behavioral telemetry data in real time directly from the client computing devices 104. In other example embodiments, the behavioral telemetry data may first be stored in a local instance of a storage engine 116 which can then process and/or manage the behavioral telemetry data that is sent to the security network 106 by client devices 104. In some examples, the local instance of storage engine 116 can receive event data 122 from security agents 108 provided by an operator of a security service that also runs the security network 106. However, in other examples, the local instance of storage engine 116 can receive and process the behavioral telemetry data from security agents 108 associated with other vendors or streams of event data 122 from other providers. In other example embodiments, the behavioral telemetry data may be transmitted from a security agent 108 to security network 106, bypassing any local instances of storage device 116, wherein the behavioral telemetry data may be first stored in a cloud instance of storage engine 116. In such case, the cloud instance of storage engine 116 can sort and route the behavioral telemetry data to instances of the compute engine 102, store event data 122 in short-term and/or long-term storage, and output event data 122 to other elements of the distributed security system 100. In all these examples, a cloud instance of compute engine 102 eventually receives event data 122 in the form or behavioral telemetry data and can then process and/or manage the behavioral telemetry data at block 1104, as described below.

A cloud instance of compute engine 102 can generate at block 1104 new event data based on received event data 122, for example, based on the received behavioral telemetry data. As examples, the compute engine 102 may generate new event data 122 based on the received behavioral telemetry data using one or more graph query operations as described above and in further detail in U.S. Patent Application Number 17/325,097, entitled "Real-Time Streaming Graph Queries" filed May 19, 2021, and U.S. Patent Application Number 17/576,734, entitled "Optimized Real-Time Streaming Graph Queries in a Distributed Digital Security System" filed January 14, 2022. For example, the received behavioral telemetry data may be added to a graph database. If the behavioral telemetry data added to the event graph matches a trigger event, a corresponding query instance can be added to a query queue, to be executed by the compute engine 102. For example, the compute engine 102 can perform comparisons, such as string match comparisons, value comparisons, hash comparisons, and/or other types of comparisons on the behavioral telemetry data, and produce new event data 122 based on results of the comparisons. Additionally, the compute engine 102 may generate new event data 122 based on the received telemetry data using at least one of one or more refinement operations 202 and one or more composition operations 302, such as described above with reference to FIGS. 2-4.

The new event data 122 generated by the compute engine 102 can be formatted and/or processed according to information stored at, and/or provided by, the ontology service 110. The new event data 122 may also be referred to as a "context collection" of one or more data elements associated with a context collection format 136 and a context collection interface 138. The ontology service 110 can also store interface fulfillment maps 140. Each interface fulfillment map 140 can be associated with a specific pairing of a context collection format 136 and a context collection interface 138, as discussed above.

In this manner, although any number of attributes about the received behavioral telemetry data could be stored in new event data 122, an ontological definition 134 of a context collection format 136 can define which specific attributes about that data are to be recorded into new event data 122 for further review and processing by components of security network 106, such as predictions engine 120. Accordingly, new event data 122 can be considered a context collection associated with a particular context collection format 136 when the new event data 122 includes data elements as defined in an ontological definition 134 of that particular context collection format 136.

A cloud instance of predictions engine 120 may be configured to process new event data 122 based on different context collection formats 136 when the event data 122 satisfies a certain context collection interface 138.

An ontological definition 134 of a context collection interface 138 can indicate a set of one or more data elements that predictions engine 120 expects to be present within new event data 122 for the predictions engine 120 to consume and/or process the new event data 122. In particular, an ontological definition 134 of a context collection interface 138 can define a minimum set of data elements, such that new event data 122 that includes that minimum set of data elements may satisfy the context collection interface 138, although additional data elements beyond the minimum set may or may not also be present in that event data 122.

The ontology service 110 can also generate and/or maintain interface fulfillment maps 140. In some examples, an interface fulfillment map 140 may also be referred to as a context collection implementation. An interface fulfillment map 140 can be provided in the ontology service 110 to pair individual context collection formats 136 with individual context collection interfaces 138. An interface fulfillment map 140 associated with a particular context collection format 136 and a particular context collection interface 138 can indicate how new event data 122, formatted according to the particular context collection format 136, satisfies the particular context collection interface 138.

The ontology service 110 can provide interface fulfillment maps 140 to predictions engine 120. As discussed above, an element of the distributed security system 100, such as predictions engine 120, may consume or process new event data 122 according to a context collection interface 138. For example, predictions engine 120 can be configured, for instance via configurations 132, to process new event data 122 based in part on whether the new event data 122 satisfies particular context collection interfaces 138. Accordingly, when predictions engine 120 receives new event data 122 formatted according to a particular context collection format 136, it can use an interface fulfillment map 140 that corresponds to that particular context collection format 136 and the context collection interface 138 to determine whether the new event data 122 satisfies the context collection interface 138, and/or to locate and identify specific portions of the new event data 122 that match the data elements specified by the ontological definition 134 of the context collection interface 138.

For example, a configuration 132 for a predictions engine 120 can be based on a context collection interface 138 that specifies that a process ID for a network event should be included in new event data 122. The predictions engine 120 can accordingly use that configuration 132 and corresponding interface fulfillment maps 140 to process new event data 122 that the predictions engine 120 receives for network events that are formatted according to any context collection format 136 that includes at least the process ID expected by the context collection interface 138. Accordingly, if the predictions engine 120 receives first event data 122 about a first network event formatted based on a first context collection format 136 that includes a process ID, and also receives second event data 122 about a second network event formatted based on a second context collection format 136 that includes a process ID as well as execution time data, predictions engine 120 can nevertheless process both the first event data 122 and the second event data 122 because both include at least the process ID specified by the context collection interface 138. For example, the predictions engine 120 may receive first event data 122 about a first network event that is formatted based on a first context collection format 136 that includes a process ID, and select a first instance of a first machine learning algorithm to process the first event data 122, while it receives second event data 122 about a second network event formatted based on a second context collection format 136 that includes a process ID as well as execution time data, and selects a second instance of the first machine learning algorithm, or a first instance of a second machine learning algorithm to process the second event data 122. As such, predictions engine 120 can use the same configuration 132 to process new event data 122 in varying forms that include at least common information expected by a context configuration interface 138, without needing new or updated configurations 132 for every possible data type or format for event data 122.

With reference to FIG. 11, at block 1106, predictions engine 120 receives new event data 122. In one example, the predictions engine 120 receives a context collection comprising the new event data 122. At block 1108, predictions engine 120 applies at least a portion of the received new event data 122 to one or more machine learning (ML) models of the security network 106 according to the new event data 122. For example, there may be multiple ML models or engines 1202A, 1202B, ..., 1202n, or instances thereof, each selected to handle certain types or kinds of new event data 122. The predictions engine 120 selects to which one or more of the multiple ML models 1202 to apply the new event data 122, or relevant portions thereof, for processing. According to some embodiments, the predictions engine 120 applies at least a portion of the new event data 122 to one or more of the ML models according to the context collection that comprises the new event data 122 or other information, such as general contextual information about the new event data 122.

Regarding the ML models, embodiments may rely on various machine learning approaches, such as supervised learning, unsupervised learning, reinforcement learning, and anomaly or outlier detection including unsupervised anomaly detection, supervised anomaly detection, and semi-supervised anomaly detection. Further, is understood that no one machine learning algorithm works best for every problem, in particular, for supervised learning (i.e. predictive modeling). For example, neural networks are not always better than decision trees or vice-versa. There are many factors to take into consideration, such as the size and structure of the dataset. Thus, some ML models 1202 use algorithms that work better on some data sets than others depending on the particular problem being solved. In that regard, the predictions engine 120 selects one or more of the ML models 1202 to which to send the new event data 122 based on the content of the new event data 122 or the context collection comprising the same. Alternatively, the ML models subscribe to or consume the new event data 122 according to the content or context collection. Thus, multiple ML models may receive and process the same new event data 122 according to the same or a different content or context collection. For example, different ML models may be embodied to handle content such as but not limited to Powershell scripts, URL strings, injected process thread content, reflectively loaded DLLs, command line content, process behaviors, network flows, and static analysis and additional context.

Embodiments of the invention are not limited to application of particular machine learning models, and may include, without limitation, AdaBoost, Boosting, ML models employing algorithms such as classification and regression trees, artificial neural networks such as Kohonen Neural networks, learning vector quantization, linear regression, logistic regression, linear discriminant analysis, naïve Bayes, random forest, support vector machines.

The one or more ML models 1202, at block 1108, analyze the new event data 122 and generate a prediction result 1204 that indicates the likelihood that the new event data 122 is, could lead to, or is a precursor to, malicious or anomalous behavior. Alternatively, the ML models output new event data 122 or a context collection representative thereof, which may be output to storage engine 116 and received again by compute engine 102 for further processing and generating yet further new event data 122 as described above, which could in turn, be processed by predictions engine 120 before emitting a prediction result 1204. According to some embodiments, the prediction result 1204 may indicate whether the occurrence of the one or more events (e.g., the behavior telemetry data) from which the new event data 122 was generated represents one or more target behaviors. Different ML models 1202 may produce different prediction results 1204 about whether the behavioral telemetry data from which the new event data 122 was generated represents one or more target behaviors. In some embodiments, the same or different ML models 1202 may produce the same or different prediction results 1204 that indicates whether the new event data 122 represents one or more target behaviors, according to the different context collections that comprise the new event data.

In some embodiments, the ML models 1202 generate, in addition to the prediction result 1204 that indicates whether the occurrence of the behavioral telemetry events from which the new event data 122 was generated represents one or more target behaviors, a confidence score associated with the prediction result 1204.

At block 1110, predictions engine 120 may transmit a prediction result 1204 to one or more of the client computing devices 104. For example, depending on a process ID, a client computing device 104 ID, a security agent 108 ID, or some combination thereof, predictions engine 120 will transmit the prediction result 1204 to a selected one or more client computing devices 104. In some embodiments, the prediction result 1204 is transmitted to one or more client computing devices 104 depending on the prediction result 1204 and/or the confidence score associated therewith. For example, if the prediction result 1204 indicates no or low likelihood that the events in question may lead to a target behavior, such as malicious or anomalous behavior, the predictions engine 120 does not transmit the prediction result 1204 to any client computing devices 104. Conversely, if the prediction result 1204 indicates a moderate or high likelihood that the events in question may lead to a target behavior, such as malicious or anomalous behavior, the predictions engine 120 may transmit the prediction result 1204 to one or more of the client computing devices 104.

Client computing devices 104, upon receipt of a prediction result 1204, and optionally a confidence score, can act on that information at block 1112. For example, a selected client computing device 104 may generate behavior detection logic to be executed by one or more processors on the client computing device 104, responsive to receiving the prediction result 1204 for the purpose of increasing the accuracy with which the client computing device 104, and in particular, the one or more security agents 108 operating therein, process incoming event data 122 to accurately distinguish between legitimate or malicious or anomalous behavior in the event data 122.

A description of three general and non-limiting examples follow in which the above described embodiments may be used to predict malicious or anomalous behavior.

### PowerShell Scripts

FIG. 12, depicts a flowchart 1200 on a client computing device 104, as Microsoft PowerShell scripts are routed through a Windows AMSI component and decoded, the first, say, 50,000 bytes of the plaintext contents of the script is captured and packaged as event data 122 that contains information such as process identifiers, a timestamp, a scripting language identifier, a hash of the script contents, command line content, and a filename. Bounding manager 128 may truncate large scripts as in this example, and include the hash of the full script and of the truncated snippet sent to security network 106. This event data 122 is then transmitted to the security network 106.

Once the event data 122 is received, for example, stored in short term memory store by storage engine 116, a compute engine 102 may perform queries over the event data 122. In this example, the compute engine 102 may search only for data events which contain PowerShell script contents, determined by the scripting language identifier present in the event data 122. The compute engine 102 then packages this filtered set of event data as new event data 122 and sends it to storage engine 116 where the new events data 122 can then be received by predictions engine 120 and processed by the ML models 1202 therein. In particular, the predictions engine 120 consumes the new event data 122 and extracts the PowerShell script content present in the event data. The PowerShell script content is then routed to one or more ML models 1202 which each create a prediction result about the behavior of the PowerShell script, e.g., whether it is malicious or anomalous behavior. Based on the prediction result 1204, the prediction result may be routed to the originating security agent 108 using client computing device 104 and/or security agent 108 identifiers present in the new event data 122, including for example the process identifiers in the new event data 122 to associate the prediction result 1204 with the originating process that generated the PowerShell script. Once the prediction result 1204 is transmitted to the selected security agents 108, the prediction result 1204 appears as local information for the originating process which can then be used for composition of detection logic or rules that govern security agent action or behavior. The security agent 108 will therefore generate detection information and artifacts based on the presence of the prediction result 1204 sent to the security agent 108 from the predictions engine 120.

### Static Analysis + Context

On a client computing device 104, when a process creation occurs, a process rollup event is generated by security agent 108 which contains a variety of contextual information about the process being created, some of which are, process identifiers, process creation flags, command line content, a filename, Window information, a hash of a primary module, subsystem information, and tag information which are annotations for use with detection and policy logic. In this example, prediction results generated by a static analysis machine learning model operating in the security agent 108 are captured as tag information on the process creation event, and this tag information is of interest by predictions engine 120 in creating a prediction result 1204. This event data 122 is then transmitted to the security network 106.

Once the data event 122 is received, for example, stored in short term memory store by storage engine 116, a compute engine 102 may perform queries over the event data 122. In this example, the compute engine 102 may search only for process creation events which include security agent 108 static analysis machine learning results for specified thresholds, as determined by the tag information resident in the process creation event data 122. The compute engine 102 then packages this filtered set of event data as new event data 122 and sends it to storage engine 116 where the new event data 122 can then be received by predictions engine 120 and processed by ML models 1202 therein. In particular, the predictions engine 120 consumes the new event data 122 and extracts a determined set of fields present in the new event data 122 including fields such as process creation flags, the command line, the filename, various window properties, the tag identifiers, etc. The extracted field contents are then routed to one or more ML models 1202 which each create a prediction result about the behavior of the primary module of the process that was created, i.e., whether it is malicious or anomalous behavior. Based on the prediction result 1204, the prediction result may be routed to the originating security agent 108 using identifiers present in the new event data 122, including the process identifiers in the new event data 122 to associate the prediction result 1204 with the originating process that generated the process creation event. Once the prediction result 1204 is transmitted to the selected security agents 108, the prediction result 1204 appears as local information for the originating process which can be used for composition of detection logic or rules that govern security agent action or behavior. The security agent 108 will therefore generate detection information and artifacts based on the presence of the prediction result 1204 sent to the security agent 108 from the predictions engine 120.

### LOLBin Process Lineage

On a client computing device 104, when a process creation occurs, a process rollup event is generated by security agent 108 which contains a variety of contextual information about the process being created, some of which are: process identifiers, process creation flags, a command line, a filename, window information, a hash of the primary module, a subsystem, and tag information which are annotations for use with detection and policy logic. This event data 122 is then transmitted to the security network 106.

Once the data event 122 is received, compute engine 102 may perform queries over the event data 122. In this example, the compute engine 102 may search only for process creation events which include a filename field that matches a known set of live-off-the-land binary (LOLBin) tools. The compute engine 102 may then query retrospectively to find parent and grandparent process creation events of each of the targeted LOLBin process creation events based on the process identifiers found in the event fields and create a single data structure which houses a determined set of fields from each of the process, parent process, and grandparent process events captured in the query results. Compute engine 102 then packages this aggregated or combined set of events as new event data 122 and sends it to storage engine 116 where the new event data 122 can then be received by predictions engine 120 and processed by ML models 1202 therein. In particular, the predictions engine 120 consumes the process lineage results written to the storage engine 116 and extracts the command line and filename fields for each of the process, parent process, and grandparent process from the new events data 122 produced by compute engine 102. The extracted fields, e.g., the command line and filename field contents for the three processes are then routed to one or more ML models 1202 which each create a prediction result about the behavior of the LOLBin process, in whether it is engaged in malicious or anomalous behavior. Based on the prediction result 1204, the prediction result 1204 may be routed to the originating security agent 108 using the identifiers present on in the new event data 122, including the process identifiers in the new event data 122 to associate the prediction result with the originating process that generated the LOLBin process creation event. Once the prediction result 1204 is transmitted to the security agent 108, the prediction result 1204 appears as local information for the originating process which can be used for composition of detection logic or rules that govern security agent action or behavior. The security agent 108 will therefore generate detection information and artifacts based on the presence of the prediction result 1204 sent to the security agent 108 from the predictions engine 120.

### Example System Architecture

FIG. 13 depicts an example system architecture 1300 for a client device 104. A client device 104 can be one or more computing devices, such as a work station, a personal computer (PC), a laptop computer, a tablet computer, a personal digital assistant (PDA), a cellular phone, a media center, an embedded system, a server or server farm, multiple distributed server farms, a mainframe, or any other type of computing device. As shown in FIG. 13, a client device 104 can include processor(s) 1302, memory 1304, communication interface(s) 1306, output devices 1308, input devices 1310, and/or a drive unit 1312 including a machine readable medium 1314.

In various examples, the processor(s) 1302 can be a central processing unit (CPU), a graphics processing unit (GPU), or both CPU and GPU, or any other type of processing unit. Each of the one or more processor(s) 1302 may have numerous arithmetic logic units (ALUs) that perform arithmetic and logical operations, as well as one or more control units (CUs) that extract instructions and stored content from processor cache memory, and then executes these instructions by calling on the ALUs, as necessary, during program execution. The processor(s) 1302 may also be responsible for executing drivers and other computer-executable instructions for applications, routines, or processes stored in the memory 1304, which can be associated with common types of volatile (RAM) and/or nonvolatile (ROM) memory.

In various examples, the memory 1304 can include system memory, which may be volatile (such as RAM), non-volatile (such as ROM, flash memory, etc.) or some combination of the two. Memory 1304 can further include non-transitory computer-readable media, such as volatile and nonvolatile, removable and non-removable media implemented in any method or technology for storage of information, such as computer-readable instructions, data structures, program modules, or other data. System memory, removable storage, and non-removable storage are all examples of non-transitory computer-readable media. Examples of non-transitory computer-readable media include, but are not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other non-transitory medium which can be used to store the desired information and which can be accessed by the client device 104. Any such non-transitory computer-readable media may be part of the client device 104.

The memory 1304 can store data, including computer-executable instructions, for a security agent 108 as described herein. The memory 1304 can further store event data 122, configurations 132, and/or other data being processed and/or used by one or more components of the security agent 108, including event detectors 124, a compute engine 102, and a communication component 130. The memory 1304 can also store any other modules and data 1316 that can be utilized by the client device 104 to perform or enable performing any action taken by the client device 104. For example, the modules and data can be a platform, operating system, and/or applications, as well as data utilized by the platform, operating system, and/or applications.

The communication interfaces 1306 can link the client device 104 to other elements through wired or wireless connections. For example, communication interfaces 1306 can be wired networking interfaces, such as Ethernet interfaces or other wired data connections, or wireless data interfaces that include transceivers, modems, interfaces, antennas, and/or other components, such as a Wi-Fi interface. The communication interfaces 1306 can include one or more modems, receivers, transmitters, antennas, interfaces, error correction units, symbol coders and decoders, processors, chips, application specific integrated circuits (ASICs), programmable circuit (e.g., field programmable gate arrays), software components, firmware components, and/or other components that enable the client device 104 to send and/or receive data, for example to exchange event data 122, configurations 132, and/or any other data with the security network 106.

The output devices 1308 can include one or more types of output devices, such as speakers or a display, such as a liquid crystal display. Output devices 1308 can also include ports for one or more peripheral devices, such as headphones, peripheral speakers, and/or a peripheral display. In some examples, a display can be a touch-sensitive display screen, which can also act as an input device 1310.

The input devices 1310 can include one or more types of input devices, such as a microphone, a keyboard or keypad, and/or a touch-sensitive display, such as the touch- sensitive display screen described above.

The drive unit 1312 and machine readable medium 1314 can store one or more sets of computer-executable instructions, such as software or firmware, that embodies any one or more of the methodologies or functions described herein. The computer-executable instructions can also reside, completely or at least partially, within the processor(s) 1302, memory 1304, and/or communication interface(s) 1306 during execution thereof by the client device 104. The processor(s) 1302 and the memory 1304 can also constitute machine readable media 1314.

FIG. 14 depicts an example system architecture for one or more cloud computing elements 1400 of the security network 106. Elements of the security network 106 described above can be distributed among, and be implemented by, one or more cloud computing elements 1400 such as servers, servers, server farms, distributed server farms, hardware computing elements, virtualized computing elements, and/or other network computing elements.

A cloud computing element 1400 can have a system memory 1402 that stores data associated with one or more cloud elements of the security network 106, including one or more instances of the compute engine 102, the ontology service 110, the pattern repository 112, the compiler 114, the storage engine 116, the bounding service 118, the prediction engine 120, and bounding manager 128. Although in some examples a particular cloud computing element 1400 may store data for a single cloud element, or even portions of a cloud element, of the security network 106, in other examples a particular cloud computing element 1400 may store data for multiple cloud elements of the security network 106, or separate virtualized instances of one or more cloud elements. For example, as discussed above, the storage engine 116 can be divided into multiple virtual shards 604, and a single cloud computing element 1400 may execute multiple distinct instances of components of more than one shard 604. The system memory 1402 can also store other modules and data 1404, which can be utilized by the cloud computing element 1400 to perform or enable performing any action taken by the cloud computing element 1400. The other modules and data 1404 can include a platform, operating system, or applications, and/or data utilized by the platform, operating system, or applications.

In various examples, system memory 1402 can be volatile (such as RAM), non- volatile (such as ROM, flash memory, etc.), or some combination of the two. Example system memory 1402 can include one or more of RAM, ROM, EEPROM, a Flash Memory, a hard drive, a memory card, an optical storage, a magnetic cassette, a magnetic tape, a magnetic disk storage or another magnetic storage devices, or any other medium.

The one or more cloud computing elements 1400 can also include processor(s) 1406, removable storage 1408, non-removable storage 1410, input device(s) 1412, output device(s) 1414, and/or communication connections 1416 for communicating with other network elements 1418, such as client devices 104 and other cloud computing elements 1400.

In some embodiments, the processor(s) 1406 can be a central processing unit (CPU), a graphics processing unit (GPU), both CPU and GPU, or other processing unit or component known in the art.

The one or more cloud computing elements 1400 can also include additional data storage devices (removable and/or non-removable) such as, for example, magnetic disks, optical disks, or tape. Such additional storage is illustrated in FIG. 14 by removable storage 1408 and non-removable storage 1410. Computer storage media may include volatile and nonvolatile, removable and non-removable media implemented in any method or technology for storage of information, such as computer readable instructions, data structures, program modules, or other data. System memory 1402, removable storage 1408 and non-removable storage 1410 are all examples of computer-readable storage media. Computer-readable storage media include, but are not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other medium which can be used to store the desired information and which can be accessed by the one or more cloud computing elements 1400. Any such computer-readable storage media can be part of the one or more cloud computing elements 1400. In various examples, any or all of system memory 1402, removable storage 1408, and non-removable storage 1410, store computer-executable instructions which, when executed, implement some or all of the herein- described operations of the security network 106 and its cloud computing elements 1400.

In some examples, the one or more cloud computing elements 1400 can also have input device(s) 1412, such as a keyboard, a mouse, a touch-sensitive display, voice input device, etc., and/or output device(s) 1414 such as a display, speakers, a printer, etc. These devices are well known in the art and need not be discussed at length here.

The one or more cloud computing elements 1400 can also contain communication connections 1416 that allow the one or more cloud computing elements 1400 to communicate with other network elements 1418. For example, the communication connections 1416 can allow the security network 106 to send new configurations 132 to security agents 108 on client devices 104, and/or receive event data 122 from such security agents 108 on client devices 104.

### Conclusion

Although the subject matter has been described in language specific to structural features and/or methodological acts, it is to be understood that the subject matter is not necessarily limited to the specific features or acts described above. Rather, the specific features and acts described above are disclosed as example embodiments.

## Claims

1. A computer-implemented method, comprising:
receiving (1102), by a compute engine (102) in a security network (106), an event stream comprising event data (122) associated with an occurrence of one or more events on one or more client computing devices (104);
wherein the event data (122) comprises a first event data (122) received at the compute engine at a first time and the first event data (122) is related to a second event data (122) that is expected to arrive at the compute engine (102) at a second time later than the first time;
sending by the compute engine (102) a claim check (702) for the second event data to a storage processor (610), the claim check (702) indicating that the compute engine (102) is expecting the second event data (122) related to the first event data that has already arrived, the claim check providing an instruction to the storage processor (610) to store the first event data (122) and to retrieve and resend the first event data (122) to the compute engine (102) along with the second event data (122) if and when the second event data (122) arrives such that the compute engine (102) processes the first event data 122 and the second event data (122) together;
disregarding by the compute engine (102) the first event data (122) if and until the related second event data 122 arrives, or a threshold period of time passes ;
generating (1104), by the compute engine, new event data based on the event data in the event stream;
receiving, by a predictions engine (120) of the security network, the new event data;
applying (1106), by the predictions engine, at least a portion of the received new event data to one or more of a plurality of machine learning models (1202A, 1202B, 1202n) of the security network according to the received new event data;
generating (1108), by the one or more of the plurality of machine learning models, a prediction result (1204) that indicates whether the occurrence of the one or more events from which the new event data was generated represents one or more target behaviors, responsive to the applying, by the predictions engine, of at least the portion of the received new event data to the one or more of the plurality of machine learning models of the security network according to the received new event data.

2. The computer-implemented method of claim 1, further comprising receiving, by the compute engine from a compiler (114) of the security network, a configuration that includes a compiled set of executable instructions for processing event data associated with occurrences of one or more events on or by one or more client computing devices.

3. The computer-implemented method of claim 1 or 2, wherein generating, by the compute engine, new event data based on the event data in the event stream comprises generating, by the compute engine, a context collection comprising new event data associated with a context collection format (136) based on the event data in the event stream.

4. The computer-implemented method of claim 3, wherein receiving, by a predictions engine of the security network, the new event data comprises receiving, by the predictions engine of the security network, the context collection comprising new event data.

5. The computer-implemented method of claim 4, wherein applying, by the predictions engine, at least a portion of the received new event data to one or more of a plurality of machine learning models according to the received new event data comprises applying, by the predictions engine, at least a portion of the new event data in the received context collection to one or more of a plurality of machine learning models according to the received context collection, optionally wherein generating, by the one or more of the plurality of machine learning models, a prediction result that indicates whether the occurrence of the one or more events from which the new event data was generated represents one or more target behaviors, responsive to the applying, by the predictions engine, of at least the portion of the received new event data to the one or more of the plurality of machine learning models of the security network according to the received new event data comprises generating, by the one or more of the plurality of machine learning models, the prediction result that indicates whether the occurrence of the one or more events from which the new event data was generated represents one or more target behaviors, responsive to the applying, by the predictions engine, of at least the portion of the received new event data in the received context collection to one or more of the plurality of machine learning models of the security network according to the received context collection.

6. The computer-implemented method of any preceding claim, wherein generating, by the compute engine, the new event data based on the event data in the event stream, comprises generating, by the compute engine using at least one of one or more query operations, one or more refinement operations (202), or one or more composition operations, the new event data based on the event data in the event stream.

7. The computer-implemented method of any preceding claim, wherein generating, by the one or more of the plurality of machine learning models, the prediction result that indicates whether the occurrence of the one or more events from which the new event data was generated represents one or more target behaviors comprises generating a confidence score associated with the prediction results.

8. The computer-implemented method of any preceding claim, further comprising transmitting (1110), by the security network, the prediction result to one or more of the plurality of client computing devices (104), optionally wherein transmitting, by the security network, the prediction result to one or more of the plurality of client computing devices (104) comprises transmitting, by the security network, the prediction result to one or more of the plurality of client computing devices responsive to the prediction result indicating that the occurrence of the one or more events from which the new event data is generated represents one or more target behaviors.

9. The computer-implemented method of any preceding claim, further comprising generating (1112) behavior detection logic, by the one or more client computing devices, for the one or more client computing devices to execute, responsive to receiving, from the security network, the prediction result.

10. The computer-implemented method of claim 3, wherein the context collection comprises new event data associated with the context collection format based on the event data in the event stream, comprises a subset of a plurality of attributes about the one or more events as defined by the context collection format.

11. The computer-implemented method of claim 10, wherein:
the event data comprises a respective process identifier for a parent process, and for each of a plurality of child processes spawned by the parent process, associated with an event, and wherein the subset of the plurality of attributes about the one or more events as defined by the context collection format, comprises one or more of the respective process identifiers, or
the plurality of attributes about the one or more events as defined by the context collection format are selected from a group of attributes consisting of: a time, an event type, a network address, and client device information, associated with the one or more events.

12. The computer-implemented method of claim 3, wherein generating, by the compute engine, the context collection comprising new event data associated with the context collection format based on the event data in the event stream comprises generating, by the compute engine, the context collection comprising new event data associated with the context collection format when the event data in the event stream satisfies a context collection interface (138).

13. The computer-implemented method of claim 12, wherein the context collection interface defines a set of one or more data elements, and wherein the event data in the event stream satisfies the context collection interface when the set of one or more data elements defined by the context collection interface is present in the event data.

14. The computer-implemented method of any preceding claim, wherein generating, by the compute engine, new event data based on the event data in the event stream comprises generating, by the compute engine, a context collection comprising new event data associated with one of a plurality of pairings of a context collection interface and a context collection format, based on the event data in the event stream.

15. The computer-implemented method of claim 14,
wherein a first one of the plurality of pairings of the context collection interface and the context collection format comprises a first context collection interface that defines a first set of one or more data elements formatted according to a first context collection format, and
wherein a second one of the plurality of pairings of the context collection interface and the context collection format comprises a second context collection interface that defines a second set of one or more data elements formatted according to a second context collection format.

16. The computer-implemented method of claim 15, wherein the first context collection interface that defines the first set of one or more data elements formatted according to the first context collection format comprises the first context collection interface that defines a process identifier of a process associated with an event formatted according to the first context collection format, and wherein the second context collection interface that defines the second set of one or more data elements formatted according to the second context collection format comprises the second context collection interface that defines the process identifier of the process and an execution time for the process, associated with the event formatted according to the second context collection format.

17. A computer system, comprising:
one or more processors;
memory storing computer-executable instructions that, when executed by the one or more processors, cause the one or more processors to perform the method of any preceding claim.

18. One or more non-transitory computer-readable media storing computer-executable instructions for one or more computing elements that, when executed by one or more processors of the one or more computing elements, cause the one or more computing elements to perform the method of any one of claims 1 to 16.

## Patentansprüche

1. Ein rechnerimplementiertes Verfahren, das Folgendes beinhaltet:
Empfangen (1102), durch eine Rechenmaschine (102) in einem Sicherheitsnetzwerk (106), eines Event-Streams, der Event-Daten (122) beinhaltet, die mit einem Auftreten von einem oder mehreren Events auf einer oder mehreren Client-Rechenvorrichtungen (104) assoziiert sind;
wobei die Event-Daten (122) erste Event-Daten (122) beinhalten, die an der Rechenmaschine zu einem ersten Zeitpunkt empfangen werden, und die ersten Event-Daten (122) sich auf zweite Event-Daten (122) beziehen, von denen erwartet wird, dass sie an der Rechenmaschine (102) zu einem zweiten Zeitpunkt später als der erste Zeitpunkt ankommen;
Senden, durch die Rechenmaschine (102), einer Anspruchsprüfung (702) für die zweiten Event-Daten an einen Speicherprozessor (610), wobei die Anspruchsprüfung (702) angibt, dass die Rechenmaschine (102) die zweiten Event-Daten (122) erwartet, die sich auf die ersten Event-Daten beziehen, die bereits angekommen sind, wobei die Anspruchsprüfung eine Anweisung an den Speicherprozessor (610) bereitstellt, die ersten Event-Daten (122) zu speichern und die ersten Event-Daten (122) zusammen mit den zweiten Event-Daten (122) abzurufen und erneut an die Rechenmaschine (102) zu senden, wenn und wann die zweiten Event-Daten (122) ankommen, sodass die Rechenmaschine (102) die ersten Event-Daten 122 und die zweiten Event-Daten (122) zusammen verarbeitet;
Ignorieren, durch die Rechenmaschine (102), der ersten Event-Daten (122), wenn und bis die zugehörigen zweiten Event-Daten 122 ankommen oder eine Schwellenzeitdauer verstrichen ist;
Erzeugen (1104), durch die Rechenmaschine, neuer Event-Daten basierend auf den Event-Daten in dem Event-Stream;
Empfangen, durch eine Vorhersagemaschine (120) des Sicherheitsnetzwerks, der neuen Event-Daten;
Anwenden (1106), durch die Vorhersagemaschine, mindestens eines Teils der empfangenen neuen Event-Daten auf eines oder mehrere einer Vielzahl von Maschinenlernmodellen (1202A, 1202B, 1202n) des Sicherheitsnetzwerks gemäß den empfangenen neuen Event-Daten;
Erzeugen (1108), durch das eine oder die mehreren der Vielzahl von Maschinenlernmodellen, eines Vorhersageergebnisses (1204), das angibt, ob das Auftreten des einen oder der mehreren Events, aus denen die neuen Event-Daten erzeugt wurden, ein oder mehrere Zielverhalten darstellt, als Reaktion auf das Anwenden, durch die Vorhersagemaschine, mindestens des Teils der empfangenen neuen Event-Daten auf das eine oder die mehreren der Vielzahl von Maschinenlernmodellen des Sicherheitsnetzwerks gemäß den empfangenen neuen Event-Daten.

2. Rechnerimplementiertes Verfahren gemäß Anspruch 1, das ferner das Empfangen, durch die Rechenmaschine von einem Compiler (114) des Sicherheitsnetzwerks, einer Konfiguration beinhaltet, die einen kompilierten Satz von ausführbaren Anweisungen zum Verarbeiten von Event-Daten umfasst, die mit dem Auftreten von einem oder mehreren Events auf oder durch eine oder mehrere Client-Rechenvorrichtungen assoziiert sind.

3. Rechnerimplementiertes Verfahren gemäß Anspruch 1 oder 2, wobei das Erzeugen, durch die Rechenmaschine, neuer Event-Daten basierend auf den Event-Daten in dem Event-Stream das Erzeugen, durch die Rechenmaschine, einer Kontextsammlung beinhaltet, die neue Event-Daten beinhaltet, die mit einem Kontextsammlungsformat (136) assoziiert sind, basierend auf den Event-Daten in dem Event-Stream.

4. Rechnerimplementiertes Verfahren gemäß Anspruch 3, wobei das Empfangen, durch eine Vorhersagemaschine des Sicherheitsnetzwerks, der neuen Event-Daten das Empfangen, durch die Vorhersagemaschine des Sicherheitsnetzwerks, der Kontextsammlung beinhaltet, die neue Event-Daten beinhaltet.

5. Rechnerimplementiertes Verfahren gemäß Anspruch 4, wobei das Anwenden, durch die Vorhersagemaschine, mindestens eines Teils der empfangenen neuen Event-Daten auf eines oder mehrere einer Vielzahl von Maschinenlernmodellen gemäß den empfangenen neuen Event-Daten das Anwenden, durch die Vorhersagemaschine, mindestens eines Teils der neuen Event-Daten in der empfangenen Kontextsammlung auf eines oder mehrere einer Vielzahl von Maschinenlernmodellen gemäß der empfangenen Kontextsammlung beinhaltet, optional wobei das Erzeugen, durch das eine oder die mehreren der Vielzahl von Maschinenlernmodellen, eines Vorhersageergebnisses, das angibt, ob das Auftreten des einen oder der mehreren Events, aus denen die neuen Event-Daten erzeugt wurden, ein oder mehrere Zielverhalten darstellt, als Reaktion auf das Anwenden, durch die Vorhersagemaschine, mindestens des Teils der empfangenen neuen Event-Daten auf das eine oder die mehreren der Vielzahl von Maschinenlernmodellen des Sicherheitsnetzwerks gemäß den empfangenen neuen Event-Daten das Erzeugen, durch das eine oder die mehreren der Vielzahl von Maschinenlernmodellen, des Vorhersageergebnisses beinhaltet, das angibt, ob das Auftreten des einen oder der mehreren Events, aus denen die neuen Event-Daten erzeugt wurden, ein oder mehrere Zielverhalten darstellt, als Reaktion auf das Anwenden, durch die Vorhersagemaschine, mindestens des Teils der empfangenen neuen Event-Daten in der empfangenen Kontextsammlung auf eines oder mehrere der Vielzahl von Maschinenlernmodellen des Sicherheitsnetzwerks gemäß der empfangenen Kontextsammlung.

6. Rechnerimplementiertes Verfahren gemäß einem der vorhergehenden Ansprüche, wobei das Erzeugen, durch die Rechenmaschine, der neuen Event-Daten basierend auf den Event-Daten in dem Event-Stream das Erzeugen, durch die Rechenmaschine unter Verwendung von mindestens einem von einem oder mehreren Abfragevorgängen, einem oder mehreren Verfeinerungsvorgängen (202) oder einem oder mehreren Zusammensetzungsvorgängen, der neuen Event-Daten basierend auf den Event-Daten in dem Event-Stream beinhaltet.

7. Rechnerimplementiertes Verfahren gemäß einem der vorhergehenden Ansprüche,
wobei das Erzeugen, durch das eine oder die mehreren der Vielzahl von Maschinenlernmodellen, des Vorhersageergebnisses, das angibt, ob das Auftreten des einen oder der mehreren Events, aus denen die neuen Event-Daten erzeugt wurden, ein oder mehrere Zielverhalten darstellt, das Erzeugen einer Vertrauensbewertung beinhaltet, die mit den Vorhersageergebnissen assoziiert ist.

8. Rechnerimplementiertes Verfahren gemäß einem der vorhergehenden Ansprüche, das ferner das Übertragen (1110), durch das Sicherheitsnetzwerk, des Vorhersageergebnisses an eine oder mehrere der Vielzahl von Client-Rechenvorrichtungen (104) beinhaltet, optional wobei das Übertragen, durch das Sicherheitsnetzwerk, des Vorhersageergebnisses an eine oder mehrere der Vielzahl von Client-Rechenvorrichtungen (104) das Übertragen, durch das Sicherheitsnetzwerk, des Vorhersageergebnisses an eine oder mehrere der Vielzahl von Client-Rechenvorrichtungen als Reaktion darauf beinhaltet, dass das Vorhersageergebnis angibt, dass das Auftreten des einen oder der mehreren Events, aus denen die neuen Event-Daten erzeugt werden, ein oder mehrere Zielverhalten darstellt.

9. Rechnerimplementiertes Verfahren gemäß einem der vorhergehenden Ansprüche, das ferner das Erzeugen (1112) von Verhaltenserkennungslogik, durch die eine oder die mehreren Client-Rechenvorrichtungen, für die eine oder die mehreren Client-Rechenvorrichtungen zum Ausführen, als Reaktion auf das Empfangen, von dem Sicherheitsnetzwerk, des Vorhersageergebnisses beinhaltet.

10. Rechnerimplementiertes Verfahren gemäß Anspruch 3, wobei die Kontextsammlung neue Event-Daten beinhaltet, die mit dem Kontextsammlungsformat assoziiert sind, basierend auf den Event-Daten in dem Event-Stream, eine Teilmenge einer Vielzahl von Attributen über das eine oder die mehreren Events, wie durch das Kontextsammlungsformat definiert, beinhaltet.

11. Rechnerimplementiertes Verfahren gemäß Anspruch 10, wobei:
die Event-Daten eine jeweilige Prozesskennung für einen übergeordneten Prozess und für jeden einer Vielzahl von untergeordneten Prozessen, die durch den übergeordneten Prozess hervorgebracht wurden, die mit einem Event assoziiert sind, beinhalten, und
wobei die Teilmenge der Vielzahl von Attributen über das eine oder die mehreren Events, wie durch das Kontextsammlungsformat definiert, eine oder mehrere der jeweiligen Prozesskennungen beinhaltet, oder
die Vielzahl von Attributen über das eine oder die mehreren Events, wie durch das Kontextsammlungsformat definiert, aus einer Gruppe von Attributen ausgewählt sind, die aus Folgendem besteht: einer Zeit, einem Eventtyp, einer Netzwerkadresse und Client-Vorrichtungsinformationen, die mit dem einen oder den mehreren Events assoziiert sind.

12. Rechnerimplementiertes Verfahren gemäß Anspruch 3, wobei das Erzeugen, durch die Rechenmaschine, der Kontextsammlung, die neue Event-Daten beinhaltet, die mit dem Kontextsammlungsformat assoziiert sind, basierend auf den Event-Daten in dem Event-Stream das Erzeugen, durch die Rechenmaschine, der Kontextsammlung beinhaltet, die neue Event-Daten beinhaltet, die mit dem Kontextsammlungsformat assoziiert sind, wenn die Event-Daten in dem Event-Stream eine Kontextsammlungsschnittstelle (138) erfüllen.

13. Rechnerimplementiertes Verfahren gemäß Anspruch 12, wobei die
Kontextsammlungsschnittstelle einen Satz von einem oder mehreren Datenelementen definiert, und wobei die Event-Daten in dem Event-Stream die Kontextsammlungsschnittstelle erfüllen, wenn der Satz von einem oder mehreren Datenelementen, der durch die Kontextsammlungsschnittstelle definiert ist, in den Event-Daten vorhanden ist.

14. Rechnerimplementiertes Verfahren gemäß einem der vorhergehenden Ansprüche, wobei das Erzeugen, durch die Rechenmaschine, neuer Event-Daten basierend auf den Event-Daten in dem Event-Stream das Erzeugen, durch die Rechenmaschine, einer Kontextsammlung beinhaltet, die neue Event-Daten beinhaltet, die mit einem von einer Vielzahl von Paarungen einer Kontextsammlungsschnittstelle und einem Kontextsammlungsformat assoziiert sind, basierend auf den Event-Daten in dem Event-Stream.

15. Rechnerimplementiertes Verfahren gemäß Anspruch 14,
wobei eine erste der Vielzahl von Paarungen der Kontextsammlungsschnittstelle und des Kontextsammlungsformats eine erste Kontextsammlungsschnittstelle beinhaltet, die einen ersten Satz von einem oder mehreren Datenelementen definiert, die gemäß einem ersten Kontextsammlungsformat formatiert sind, und
wobei eine zweite der Vielzahl von Paarungen der Kontextsammlungsschnittstelle und des Kontextsammlungsformats eine zweite Kontextsammlungsschnittstelle beinhaltet, die einen zweiten Satz von einem oder mehreren Datenelementen definiert, die gemäß einem zweiten Kontextsammlungsformat formatiert sind.

16. Rechnerimplementiertes Verfahren gemäß Anspruch 15, wobei die erste Kontextsammlungsschnittstelle, die den ersten Satz von einem oder mehreren Datenelementen definiert, die gemäß dem ersten Kontextsammlungsformat formatiert sind, die erste Kontextsammlungsschnittstelle beinhaltet, die eine Prozesskennung eines Prozesses definiert, der mit einem Event assoziiert ist, das gemäß dem ersten Kontextsammlungsformat formatiert ist, und wobei die zweite Kontextsammlungsschnittstelle, die den zweiten Satz von einem oder mehreren Datenelementen definiert, die gemäß dem zweiten Kontextsammlungsformat formatiert sind, die zweite Kontextsammlungsschnittstelle beinhaltet, die die Prozesskennung des Prozesses und eine Ausführungszeit für den Prozess definiert, die mit dem Event assoziiert ist, das gemäß dem zweiten Kontextsammlungsformat formatiert ist.

17. Ein Rechnersystem, das Folgendes beinhaltet:
einen oder mehrere Prozessoren;
Speicher, der rechnerausführbare Anweisungen speichert, die, wenn sie durch den einen oder die mehreren Prozessoren ausgeführt werden, den einen oder die mehreren Prozessoren veranlassen, das Verfahren gemäß einem der vorhergehenden Ansprüche durchzuführen.

18. Ein oder mehrere nichtflüchtige rechnerlesbare Medien, die rechnerausführbare Anweisungen für ein oder mehrere Rechenelemente speichern, die, wenn sie durch einen oder mehrere Prozessoren des einen oder der mehreren Rechenelemente ausgeführt werden, das eine oder die mehreren Rechenelemente veranlassen, das Verfahren gemäß einem der Ansprüche 1 bis 16 durchzuführen.

## Revendications

1. Un procédé mis en œuvre par ordinateur, comprenant :
la réception (1102), par un moteur de calcul (102) dans un réseau de sécurité (106), d'un flux d'événements comprenant des données d'événement (122) associées à une occurrence d'un ou plusieurs événements sur un ou plusieurs dispositifs informatiques clients (104) ;
où les données d'événement (122) comprennent des premières données d'événement (122) reçues au niveau du moteur de calcul à un premier instant et les premières données d'événement (122) sont liées à des deuxièmes données d'événement (122) dont l'arrivée est attendue au niveau du moteur de calcul (102) à un deuxième instant ultérieur au premier instant ;
l'envoi par le moteur de calcul (102) d'un ticket (702) pour les deuxièmes données d'événement à un processeur de stockage (610), le ticket (702) indiquant que le moteur de calcul (102) attend les deuxièmes données d'événement (122) liées aux premières données d'événement qui sont déjà arrivées, le ticket fournissant une instruction au processeur de stockage (610) pour stocker les premières données d'événement (122) et pour récupérer et renvoyer les premières données d'événement (122) au moteur de calcul (102) ainsi que les deuxièmes données d'événement (122) si et quand les deuxièmes données d'événement (122) arrivent de telle sorte que le moteur de calcul (102) traite les premières données d'événement 122 et les deuxièmes données d'événement (122) ensemble ;
la non prise en compte par le moteur de calcul (102) des premières données d'événement (122) si et jusqu'à ce que les deuxièmes données d'événement 122 liées arrivent, ou qu'une période de temps seuil s'écoule ;
la génération (1104), par le moteur de calcul, de nouvelles données d'événement sur la base des données d'événement dans le flux d'événements ;
la réception, par un moteur de prédiction (120) du réseau de sécurité, des nouvelles données d'événement ;
l'application (1106), par le moteur de prédiction, d'au moins une portion des nouvelles données d'événement reçues à un ou plusieurs d'une pluralité de modèles d'apprentissage machine (1202A, 1202B, 1202n) du réseau de sécurité selon les nouvelles données d'événement reçues ;
la génération (1108), par les un ou plusieurs de la pluralité de modèles d'apprentissage machine, d'un résultat de prédiction (1204) qui indique si l'occurrence des un ou plusieurs événements à partir desquels les nouvelles données d'événement ont été générées représente un ou plusieurs comportements cibles, en réponse à l'application, par le moteur de prédiction, d'au moins la portion des nouvelles données d'événement reçues aux un ou plusieurs de la pluralité de modèles d'apprentissage machine du réseau de sécurité selon les nouvelles données d'événement reçues.

2. Le procédé mis en œuvre par ordinateur de la revendication 1, comprenant en outre la réception, par le moteur de calcul en provenance d'un compilateur (114) du réseau de sécurité, d'une configuration qui inclut un ensemble compilé d'instructions exécutables destinées au traitement de données d'événement associées à des occurrences d'un ou plusieurs événements sur ou par un ou plusieurs dispositifs informatiques clients.

3. Le procédé mis en œuvre par ordinateur de la revendication 1 ou de la revendication 2, où la génération, par le moteur de calcul, de nouvelles données d'événement sur la base des données d'événement dans le flux d'événements comprend la génération, par le moteur de calcul, d'un recueil de contextes comprenant de nouvelles données d'événement associées à un format de recueil de contextes (136) sur la base des données d'événement dans le flux d'événements.

4. Le procédé mis en œuvre par ordinateur de la revendication 3, où la réception, par un moteur de prédiction du réseau de sécurité, des nouvelles données d'événement comprend la réception, par le moteur de prédiction du réseau de sécurité, du recueil de contextes comprenant de nouvelles données d'événement.

5. Le procédé mis en œuvre par ordinateur de la revendication 4, où l'application, par le moteur de prédiction, d'au moins une portion des nouvelles données d'événement reçues à un ou plusieurs d'une pluralité de modèles d'apprentissage machine selon les nouvelles données d'événement reçues comprend l'application, par le moteur de prédiction, d'au moins une portion des nouvelles données d'événement dans le recueil de contextes reçu à un ou plusieurs d'une pluralité de modèles d'apprentissage machine selon le recueil de contextes reçu, facultativement où la génération, par les un ou plusieurs de la pluralité de modèles d'apprentissage machine, d'un résultat de prédiction qui indique si l'occurrence des un ou plusieurs événements à partir desquels les nouvelles données d'événement ont été générées représente un ou plusieurs comportements cibles, en réponse à l'application, par le moteur de prédiction, d'au moins la portion des nouvelles données d'événement reçues aux un ou plusieurs de la pluralité de modèles d'apprentissage machine du réseau de sécurité selon les nouvelles données d'événement reçues comprend la génération, par les un ou plusieurs de la pluralité de modèles d'apprentissage machine, du résultat de prédiction qui indique si l'occurrence des un ou plusieurs événements à partir desquels les nouvelles données d'événement ont été générées représente un ou plusieurs comportements cibles, en réponse à l'application, par le moteur de prédiction, d'au moins la portion des nouvelles données d'événement reçues dans le recueil de contextes reçu à un ou plusieurs de la pluralité de modèles d'apprentissage machine du réseau de sécurité selon le recueil de contextes reçu.

6. Le procédé mis en œuvre par ordinateur de n'importe quelle revendication précédente, où la génération, par le moteur de calcul, des nouvelles données d'événement sur la base des données d'événement dans le flux d'événements, comprend la génération, par le moteur de calcul en utilisant au moins l'une d'une ou plusieurs opérations d'interrogation, d'une ou plusieurs opérations d'affinement (202), ou d'une ou plusieurs opérations de composition, des nouvelles données d'événement sur la base des données d'événement dans le flux d'événements.

7. Le procédé mis en œuvre par ordinateur de n'importe quelle revendication précédente, où la génération, par les un ou plusieurs de la pluralité de modèles d'apprentissage machine, du résultat de prédiction qui indique si l'occurrence des un ou plusieurs événements à partir desquels les nouvelles données d'événement ont été générées représente un ou plusieurs comportements cibles comprend la génération d'un score de confiance associé aux résultats de prédiction.

8. Le procédé mis en œuvre par ordinateur de n'importe quelle revendication précédente, comprenant en outre la transmission (1110), par le réseau de sécurité, du résultat de prédiction à un ou plusieurs de la pluralité de dispositifs informatiques clients (104), facultativement où la transmission, par le réseau de sécurité, du résultat de prédiction à un ou plusieurs de la pluralité de dispositifs informatiques clients (104) comprend la transmission, par le réseau de sécurité, du résultat de prédiction à un ou plusieurs de la pluralité de dispositifs informatiques clients en réponse au fait que le résultat de prédiction indique que l'occurrence des un ou plusieurs événements à partir desquels les nouvelles données d'événement ont été générées représente un ou plusieurs comportements cibles.

9. Le procédé mis en œuvre par ordinateur de n'importe quelle revendication précédente, comprenant en outre la génération (1112) d'une logique de détection de comportement, par les un ou plusieurs dispositifs informatiques clients, à exécuter par les un ou plusieurs dispositifs informatiques clients, en réponse à la réception, en provenance du réseau de sécurité, du résultat de prédiction.

10. Le procédé mis en œuvre par ordinateur de la revendication 3, où le recueil de contextes comprend de nouvelles données d'événement associées au format de recueil de contextes sur la base des données d'événement dans le flux d'événements, comprend un sous-ensemble d'une pluralité d'attributs concernant les un ou plusieurs événements tels que définis par le format de recueil de contextes.

11. Le procédé mis en œuvre par ordinateur de la revendication 10, où :
les données d'événement comprennent un identifiant de processus respectif pour un processus parent, et pour chacun d'une pluralité de processus enfants engendrés par le processus parent, associés à un événement, et où le sous-ensemble de la pluralité d'attributs concernant les un ou plusieurs événements tels que définis par le format de recueil de contextes, comprend un ou plusieurs des identifiants de processus respectifs, ou
la pluralité d'attributs concernant les un ou plusieurs événements tels que définis par le format de recueil de contextes sont sélectionnés dans un groupe d'attributs consistant en : une heure, un type d'événement, une adresse réseau, et des informations de dispositif client, associés aux un ou plusieurs événements.

12. Le procédé mis en œuvre par ordinateur de la revendication 3, où la génération, par le moteur de calcul, du recueil de contextes comprenant de nouvelles données d'événement associées au format de recueil de contextes sur la base des données d'événement dans le flux d'événements comprend la génération, par le moteur de calcul, du recueil de contextes comprenant de nouvelles données d'événement associées au format de recueil de contextes lorsque les données d'événement dans le flux d'événements satisfont à une interface de recueil de contextes (138).

13. Le procédé mis en œuvre par ordinateur de la revendication 12, où l'interface de recueil de contextes définit un ensemble d'un ou plusieurs éléments de données, et où les données d'événement dans le flux d'événements satisfont à l'interface de recueil de contextes lorsque l'ensemble d'un ou plusieurs éléments de données défini par l'interface de recueil de contextes est présent dans les données d'événement.

14. Le procédé mis en œuvre par ordinateur de n'importe quelle revendication précédente, où la génération, par le moteur de calcul, de nouvelles données d'événement sur la base des données d'événement dans le flux d'événements comprend la génération, par le moteur de calcul, d'un recueil de contextes comprenant de nouvelles données d'événement associées à l'un d'une pluralité d'appariements d'une interface de recueil de contextes et d'un format de recueil de contextes, sur la base des données d'événement dans le flux d'événements.

15. Le procédé mis en œuvre par ordinateur de la revendication 14,
où un premier de la pluralité d'appariements de l'interface de recueil de contextes et du format de recueil de contextes comprend une première interface de recueil de contextes qui définit un premier ensemble d'un ou plusieurs éléments de données formatés selon un premier format de recueil de contextes, et
où un deuxième de la pluralité d'appariements de l'interface de recueil de contextes et du format de recueil de contextes comprend une deuxième interface de recueil de contextes qui définit un deuxième ensemble d'un ou plusieurs éléments de données formatés selon un deuxième format de recueil de contextes.

16. Le procédé mis en œuvre par ordinateur de la revendication 15, où la première interface de recueil de contextes qui définit le premier ensemble d'un ou plusieurs éléments de données formatés selon le premier format de recueil de contextes comprend la première interface de recueil de contextes qui définit un identifiant de processus d'un processus associé à un événement formaté selon le premier format de recueil de contextes, et où la deuxième interface de recueil de contextes qui définit le deuxième ensemble d'un ou plusieurs éléments de données formatés selon le deuxième format de recueil de contextes comprend la deuxième interface de recueil de contextes qui définit l'identifiant de processus du processus et une heure d'exécution pour le processus, associés à l'événement formaté selon le deuxième format de recueil de contextes.

17. Un système d'ordinateur, comprenant :
un ou plusieurs processeurs ;
une mémoire stockant des instructions exécutables par ordinateur qui, lorsqu'elles sont exécutées par les un ou plusieurs processeurs, amènent les un ou plusieurs processeurs à réaliser le procédé de n'importe quelle revendication précédente.

18. Un ou plusieurs supports non transitoires lisibles par ordinateur stockant des instructions exécutables par ordinateur pour un ou plusieurs éléments informatiques qui, lorsqu'elles sont exécutées par un ou plusieurs processeurs des un ou plusieurs éléments informatiques, amènent les un ou plusieurs éléments informatiques à réaliser le procédé de n'importe laquelle des revendications 1 à 16.
